# EUROPÄISCHE PATENTSCHRIFT

(11) **EP 1 014 031 B1**
(45) Veröffentlichungstag und Bekanntmachung des Hinweises auf die Patenterteilung: **01.03.2006**
(21) Anmeldenummer: 99125634.8
(22) Anmeldetag: 22.12.1999
(51) Int. Cl.: G01B 7/02, B66B 15/06, B66B 1/32, B66B 1/34

(54) **Messseil-Wegsensor mit einem Längsantrieb für die Seiltrommel**
Measuring cable distance sensor having a longitudinal drive for the cable drum
Capteur de distance avec entraînement longitudinal pour le tambour de câble de mesure

(30) Priorität: 22.12.1998 DE 19859445
(43) Veröffentlichungstag der Anmeldung: 28.06.2000
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Alber, Norbert

(56) Entgegenhaltungen:
- EP-A- 0 778 239
- DE-C- 729 362
- DE-U- 29 816 005
- US-A- 4 443 888
- US-A- 4 655 399

## Beschreibung

Die Erfindung betrifft einen Meßsell-Wegsensor.

Meßseit-Wegsensoren sind in vielfacher Ausformung bekannt, um die exakte Positionierung eines bestimmten Bauteiles, welches sich insbesondere über große Weglängen bewegen kann, zu bestimmen, beispielsweise der Kabine eines Aufzuges. Ein derartiger Meßseil-Wegsensor weist ein Zugelement, etwa ein Meßseil, auf, welches auf einer in die Aufwickelrichtung vorgespannten Seiltrommel aufgewickelt ist, und dessen freies Ende mit demjenigen Gegenstand verbunden ist, dessen Position bestimmt werden soll, beispielsweise der Aufzugskabine. Die Vorspannung der Seiltrommel erfolgt beispielsweise über eine Flachspiralfeder, die beispielsweise koaxial zur Seiltrommel angeordnet und mit dieser drehfest verbunden ist.

Die Seiltrommel ist femer mit einer Bestimmungseinheit gekoppelt, die die Umdrehungen bzw. Winkelelemente registriert, welche die Seiltrommel in Aufwickelrichtung bzw. Abwickelrichtung durchläuft, und daraus über eine Auswerteelektronik die abgezogene Länge des Zugelementes bestimmt.

Zur Vereinfachung dieser Bestimmung ist das Zugelement, beispielsweise das Meßseil, in nur einer einzigen Lage auf dem Umfang der Seiltrommel axial nebeneinander aufgewickelt, da hierdurch eine Umdrehung der Seiltrommel immer der exakt gleichen Länge des Zugelementes entspricht.

Um die Bewicklung in nur einer Lage und das Überspringen des Zugelementes beim Bewickeln der Wickeltrommel in eine zweite Lage zu verhindem, müssen mechanische Vorkehrungen konstruktiver Art an dem Wegsensor getroffen werden.

Dabei kommt erschwerend hinzu, daß diese Meßseil-Wegsensoren oft in einer nachteiligen Umgebung, mit z. B. hoher Verschmutzung, eingesetzt werden müssen. Deshalb muß der Meßseil-Wegsensor in einem dichten Gehäuse untergebracht werden, und auch das aus dem Gehäuse herausgeführte Meßseil muß über eine möglichst dichte Seildurchführung aus dem Gehäuse herausgeführt sein.

Um ein sauberes einlagiges Aufwickeln des Meßseiles auf der Seiltrommel zu gewährleisten, besteht eine Möglichkeit darin, die Seiltrommel in axialer Richtung sehr kurz auszubilden. Wenn zusätzlich der Seileinlauf ausreichende Entfernung von der Seiltrommel besitzt, läuft das Meßseil vom Seileinlauf zur Seiltrommel nur unter einer so geringen Winkelauslenkung, die noch vertretbar ist, und automatisch eine Bewicklung der in Aufwickelrichtung vorgespannten Seiltrommel in nur einer Lage bewirkt.

Selbst wenn zum Ausgleich der Durchmesser der Seiltrommel relativ groß gewählt wird, bewirkt dies eine Begrenzung der maximal möglichen Länge des Meßseiles. Zusätzlich ergibt sich eine Bauform, die in radialer Richtung sehr groß baut, und eine einzige Umdrehung der Seiltrommel entspricht dabei einer relativ großen Umfangslänge, wodurch die Auflösung des Meßseil-Wegsensores begrenzt ist.

ist aus den genannten Einschränkungen heraus eine wesentlich größere axiale Erstreckung der Seiltrommel notwendig, muß beim Bewickeln oder Abwickeln des Meßseiles der Seileinlauf relativ zur Seiltrommel so bewegt werden, daß der Seileinlauf sich in etwa in der Radialebene der momentanen Bewicklung befindet.

Es ist dabei sowohl bekannt, die Seiltrommel axialfest im Gehäuse anzuordnen, und demgegenüber den Seileinlauf in axialer Richtung zu verschieben, als auch umgekehrt.

Auf den ersten Blick mag es zwar einfacher zu lösen sein, den relativ kleinen und leichten Seileinlauf axial verschiebbar auszugestalten, als die rotierend gelagerte Seiltrommel, unter dem Aspekt einer guten Abdichtung des Meßseilwegsensors gegenüber der Umgebung werden jedoch am Gehäuse fest angeordnete Seildurchführungen und somit axial verschiebbare Meßseiltrommeln bevorzugt.

Hierzu ist es beispielsweise aus der US 4 443 888 bekannt, die Meßseiltrommel direkt auf einer zentralen Gewindespindel drehbar zu lagern wobei die Steigung der Gewindespindel die Relation zwischen Drehung und Längsverschiebung der Seiltrommel festlegt. Die Drehung der Seiltrommel wird über einen exzentrischen Mitnehmer auf die Rückstelleinheit der Seiltrommel übertragen.

Weiterhin ist es aus dem europäischen Patent 0 778 239 bekannt, die Gewindespindel hohl auszubilden, und im Inneren der holten Gewindespindel hierzu koaxial eine Welle, z. B. eine Vielzahnwelle anzuordnen, auf welcher die Seiltrommel mit einer ihrer Stimplatten längs verschiebbar aber drehfest angeordnet ist, während die andere Stimplatte der Seiltrommel in Gewindeeingriff mit dem Außengewinde der Gewindespindel steht. Der Längsantrieb in Form der Gewindespindel einerseits und die Übertragung der Drehung der Seiltrommel an den Drehwinkelsensor und/oder den Rückstellantrieb mittels der Vielzahnwelle andererseits sind somit im Zentrum der Meßseiltrommel koaxial zueinander angeordnet.

Der Nachteil dieser Bauformen liegt jedoch darin, daß das Maß der Längsverschiebung von der Gewindesteigung der Gewindespindel und der damit zusammenwirkenden Spindelmutter abhängen. Wird beispielsweise ein Meßseil mit größerer Dicke verwendet, etwa weil die auf das Meßseil einwirkende Zugbelastung relativ groß ist, so wird bei Umdrehung der Meßseiltrommel auch eine größere Längsverschiebung benötigt als bei einem dünnen Meßseil.

Bei den herkömmlichen Bauformen müßten hierzu die zentral zur Seiltrommel laufende Gewindespindel und die damit zusammenwirkende Spindelmutter ausgetauscht werden, was eine vollständige Zerlegung des Meßseilsensors, einschließlich Montage und damit bei der Montage erneutem Vorspannen der Rückstelleinrichtung, die ja in der Regel eine Flachformfeder in Form einer Spiralfeder ist, erfordert. Dies kann selbst vom spezialisierten Monteur vor Ort kaum geleistet werden, ganz abgesehen von dem notwendigen hohen Zeitaufwand.

Es ist daher die Aufgabe der vorliegenden Erfindung, einen Meßseil-Wegsensor der gattungsbildenden Art zu schaffen, bei dem das Verhältnis zwischen Drehung der Seiltrommel und deren Längsverschiebung auf einfache Art und Weise, insbesondere auch nachträglich, verändert werden kann, und bei dem insbesondere eine sehr reibungsarme Lagerung der Seiltrommel gegeben ist, trotz einfachen und kostengünstigen Aufbaus und Wartungsmöglichkeit des Meßseilwegsensors:

Diese Aufgabe wird durch die Merkmale des Anspruchs 1 gelöst. Vorteilhafte Ausführungsformen ergeben sich aus den Unteransprüchen.

Dadurch, daß der Längsantrieb nicht nur aus dem Spindelantrieb, sondern einem zusätzlichen Getriebe besteht, kann dieses zusätzliche Getriebe so angeordnet und ausgestaltet werden, daß auf einfache Art und Weise eine Veränderung der Übersetzung dieses zusätzlichen Getriebes bewirkt werden kann, beispielsweise durch Austausch der Riemenscheiben gegen solche mit größerem und/oder kleinerem Durchmesser bei den Scheiben eines Riemengetriebes, insbesondere eines Zahnriemengetriebes oder Zahnradgetriebes.

Durch Anordnung eines Riemenspanners muß dabei nicht einmal der Zahnriemen mitgewechselt werden. Eine solche günstige und leicht zugängliche Anordnung ist gegeben, wenn Gewindespindel und Seiltrommel um parallele Achsen zueinander rotieren, und dabei insbesondere in den Endplatten des Gehäuses gelagert sind. Dabei wird vorzugsweise die mit der Seiltrommel mitdrehende Welle als Zentralwelle ausgebildet sein, und die Seiltrommel - direkt oder indirekt - längsverschieblich, aber drehfest darauf befestigt sein.

So könnte die Seiltrommel beispielsweise in einem Schlitten drehbar gelagert sein, welcher längsverschieblich auf der Zentralwelle drehfest angeordnet ist.

Eine andere Möglichkeit besteht darin, daß zwar die Seiltrommel direkt oder mittels eines mitdrehenden Zwischenteiles auf der Zentralwelle längsverschieblich und drehfest gelagert ist, aber in axialer Richtung dennoch in einem Schlitten geführt ist. Die Axialbewegung muß dann lediglich auf diesen Schlitten übertragen werden, und nicht direkt auf die Seiltrommel.

Dies bietet insbesondere den Vorteil, die Axiallagerung der Seiltrommel in dem Schlitten besonders reibungsarm auszugestalten, beispielsweise durch berührungsfreie Lagerung mittels Magneten, insbesondere wartungsfreien Permanentmagneten.

Zu diesem Zweck sind in den Stimplatten der Seiltrommel einerseits und den entgegengerichteten Flächen des Schlittens andererseits hinsichtlich ihrer Polarität axial ausgerichtete Magnete, beispielsweise ringförmige Magnete, am besten koaxial zur Drehachse der Seiltrommel, angeordnet, die mit gleichen Polen gegeneinander gerichtet sind. Da somit an beiden stirnseitigen Enden die Magnete der Seiltrommel von den Magneten des Schlittens abgestoßen werden, stellt sich die Seiltrommel automatisch immer mittig und auf beiden Seiten berührungsfrei zum Schlitten in Axialrichtung ein.

Die einfache Veränderung der Getriebeübersetzung eröffnet insbesondere die Möglichkeit, die Längsverschiebung der Seiltrommel so zu wählen, daß die einzelnen Wicklungen des Meßseiles auf der Seiltrommel zwar knapp nebeneinander, jedoch berührungslos zueinander in Anpassung an den jeweiligen Seildurchmesser aufgebracht werden, was den Verschleiß des Meßseiles beim Auf- und Abwickeln reduziert.

Vorzugsweise sind außer der Seiltrommel auch der Längsantrieb, also der Spindelantrieb und das zusätzliche Getriebe, innerhalb des Gehäuses, und zwar insbesondere im selben Innenraum des Gehäuses, dicht aufgenommen, und somit vor Verschmutzung durch die Umgebung gesichert. Die zentrale Welle und auch die Gewindespindel sind dabei vorzugsweise in den Stimplatten des Gehäuses gelagert, wobei das Gehäuse vorzugsweise aus einem oder mehreren in Längsrichtung verlaufenden Profilen, insbesondere Strangpreßprofilen, besteht, die durch Stimplatten verschlossen sind.

Diese werden auf das oder die Profile stimseitig auf einfache Art und Weise aufgeschraubt, indem das bzw. die Profile in den Innenflächen Schraubkanäle aufweisen in Form von zur Innenseite hin offenen, hinterschnittenen Nuten mit annähernd rundem Querschnitt, so daß in diesen runden Querschnitt der Schraubkanäle stimseitig selbstschneidende Schrauben eingeschraubt werden können.

Der Rückstellantrieb für die Seiltrommel, in der Regel eine Flachformfeder in Form einer Spiralfeder bzw. mehrere solcher axial hintereinander angeordneter Flachformfedern in Form einer ganzen Flachformfederkaskade, sind vorzugsweise koaxial, und insbesondere direkt auf der zentralen Welle angeordnet, bevorzugt außerhalb des Gehäuses für die Seiltrommel in einem separat aufzusetzenden Gehäusedeckel. Gleiches gilt - vorzugsweise für das entgegengesetzte Ende - der zentralen Welle für den Drehwinkelsensor.

Damit das Meßseil die gesamte axiale Länge der Meßseiltrommel überstreichen kann, muß im Inneren des Gehäuses die zentrale Welle eine axiale Länge von etwa der doppelten axialen Erstreckung der Meßseiltrommel besitzen.

Bei der Lagerung der Meßseiltrommei in einem Schlitten befinden sich dabei die Lager der Meßseiltrommel und zwar im Abstand der axialen Erstreckung der Meßseiltrommel zueinander, während bei Verschrauben der Meßseiltrommel direkt entlang einer Gewindespindel nur die Gewindespindel gelagert werden kann, und zwar mit einer Lagerentfemung, die etwa der doppelten axialen Erstreckung der Meßseiltrommel entspricht, in den Stirnwänden des Gehäuses.

Der im Gehäuse fest angeordnete Seileinlauf befindet sich aufgrund der Verschiebbarkeit der Seiltrommel axial in der Mitte des Gehäuses, und besteht im wesentlichen aus einem topfförmigen Grundkörper mit Durchgangsbohrung im Boden des Grundkörpers, wobei der Grundkörper und dessen Durchgangsbohrung vom Meßseil zentral durchlaufen wird.

In dem Grundkörper sind von außen nach innen hintereinander ein Dämpfungselement auf der Außenseite, für den Aufprall des Seilanschlagstückes, nachfolgend eine Seildurchführung aus hoch verschleißfestem Material und danach axial beabstandet vorzugsweise mehrere Seilabstreifer angeordnet. Die Seilabstreifer sind Plattenförmig ausgebildet, und liegen in engem Kontakt an der Außenfläche des Meßseiles an. Die Seildurchführung hat eine größere axiale Erstreckung und weist eine trompetenartig von innen nach außen sich erweiternde Öffnung auf.

Zwischen die einzelnen Seilabstreifer können Füllungen aus Fett oder anderen abdichtenden und Verschmutzungen aufnehmenden Stoffen angeordnet werden. Am nach innen weisenden Ausgang des Grundkörpers ist eine weitere Seilführung angeordnet, die sich trompetenartig zum Innenraum des Gehäuses des Meßseilwegsensors hin erweitert.

### Weiterbildung mittels Magneten:

Eine Begrenzung der Drehgeschwindigkeit beim Aufwickeln der Seiltrommel wird erreicht, indem eine berührungslose, magnetische Bremse verwendet wird. Die dabei beteiligten Bauteile müssen aus einem elektrisch leitenden Material bestehen.

Das Bremsmoment wird erzeugt zwischen einem exzentrisch liegenden Bereich der Seiltrommel, vorzugsweise einen Bereich nahe deren Außenumfang, und einem demgegenüber liegenden ortsfesten Punkt, beispielsweise des Gehäuses der Meßseiltrommel.

Da auf der radial äußenliegenden Mantelfläche die Bewicklung mittels Meßseil erfolgt, erfolgt die Ausrichtung der Magnete vorzugsweise in Längsrichtung, also parallel zur Rotationsachse der Seiltrommel, zwischen zwei in dieser Axialrichtung benachbarten Bauteile.

Dabei wird aufgrund der Drehung der Seiltrommel unabhängig vom Abstand des Bremsmagneten gegenüber dem zu beeinflussenden Bauteil zunächst ein Wirbelstrom in dem Bauteil erzeugt, welcher den Bremsmagneten trägt. Dieser Wirbelstrom hat ein Magnetfeld zur Folge, das sich über den nicht im Magnetfeld befindlichen Teil schließt und ein Bremsmoment bewirkt.

Die Bremswirkung wird - neben der Stärke des verwendeten Magneten - sehr stark von dem Abstand zwischen Magnet und zu beeinflussendem Bauteil bestimmt, weshalb dieser Abstand vorzugsweise einstellbar sein soll.

Das jeweils vom Bremsmagnet zu beeinflussende Bauteil muß aus elektrisch leitfähigem Material, beispielsweise Aluminium, bestehen. Bei Anordnung der Magnete an der Seiltrommel erhöht sich deren träge Masse, weshalb zunächst der Gedanke naheliegt, den bzw. die Bremsmagneten an einem ortsfesten Punkt z. B. des Gehäuses anzuordnen. Dies würde auch den Zwang einer paarweisen, nicht unwuchtigen, Anordnung der Bremsmagnete beheben, und es würden auch mehr Raum, z. B. für den Einsatz eines Magnethalters für die Einstellbarkeit Luftspaltes, zur Verfügung stehen.

Für die Anordnung der Bremsmagnete an der Seiltrommel spricht jedoch die Möglichkeit, diese Bremsmagnete gleichzeitig und damit funktionsvereinigt als Haltemagnete zu nutzen.

Unter Haltemagneten sollen hier Magnete verstanden werden, die das radiale "Aufsteigen" des Meßseiles von der Wickelfläche, der Außenfläche des Wickelzylinders, vermeiden sollen, indem das (für diesen Zweck notwendigerweise magnetisierbare) Material des Meßseiles durch Magnetkraft radial nach innen gegen die Wickelfläche gezogen wird. Derartige Haltemagnete müssen dementsprechend radial innerhalb der Wickelfläche an der Seiltrommel eingesetzt werden, vorzugsweise also auf der Innenseite des aus dünnem Material bestehenden Wickelzylinders befestigt werden, vorzugsweise wiederum über den Umfang der Seiltrommel verteilt. Auch hier empfiehlt sich die Ausrichtung der Magnetisierungsachse des Magneten parallel zur Rotationsachse der Seiltrommel, also z. B. die Anordnung eines Stabmagneten, insbesondere eines Permanentmagneten, in Längsrichtung liegend.

Die Magnetkraft kann in beiden Fällen bekanntermaßen durch die Anordnung von sogenannten Polschuhen, also die dichte Anlage von Eisenwerkstoffen auf wenigstens einer Außenseite des Magneten, erhöht werden, um die Magnetvenuste zu reduzieren. In derjenigen Richtung, in welcher der freie Ein- bzw. Austritt der Feldlinien in den Magneten benötigt wird, darf vorzugsweise keine Abdeckung durch einen Polschuh erfolgen. Es werden deshalb hauptsächlich topfförmige Polschuhe bevorzugt, die beim Bremsmagneten mit ihrer offenen Seite gegen das zu beeinflussende Bauteil und beim Haltemagneten mit der offenen Seite radial nach außen gegen das Meßseil gerichtet sind.

Zusätzlich ist eine Erhöhung der Bremskraft möglich, indem sogenannte Seltenerd-Magnete, also Magnete mit Bestandteilen aus Somarium, Kobalt, Neodym, und/oder Bor verwendet werden. Insbesondere sind mit derartigen Seltenerd-Magneten scheibenförmige Magnete realisierbar, deren Magnetisierungsachse parallel zur Dicke der Scheibe durch die Scheibe hindurch verläuft und/oder die dabei sektorartig unterschiedlich magnetisiert sein können.

Derartige scheibenförmige Magnete können in den beengten Platzverhältnissen der Meßseil-Wegsensoren einfacher untergebracht wenden als längliche Stabmagnete.

Insbesondere ist die Aufnahme dieser scheibenförmigen Magnete in der Stimseite von Gewindebolzen als Magnethalter möglich, die dann in den tragenden Bauteil durch Verschraubung an das zu beeinflussende Bauteil näher herangeführt oder von diesem weiter abgerückt werden können zur Einstellbarkeit der gewünschten Wirkung.

Alternativ und/oder ergänzend zu den Haltemagneten kann auch über den Außenumfang der beweglichen Seiltrommel ein Gleitband, insbesondere ein Textil-Band oder ein Filzband oder insbesondere aus Kunststoff wie PE, POM, PTFE bestehend, gelegt werden, welches bei korrekter Bewicklung der Seiltrommel keinen Kontakt zu der Meßseilwiklung hat, bzw. kraftlos an diesem anliegt, jedoch bei Aufsteigen des Meßseiles eine Kraft auf des aufsteigende Meßseil bewirkt.

Eine Ausführungsform gemäß der Erfindung ist nachfolgend anhand der Figuren beispielhaft näher beschrieben. Es zeigen
- Fig. 1: Längsschnitte durch Meßseil-Wegsensoren;
- Fig. 2: einen Querschnitt entlang der Linie A-A;
- Fig. 3: Querschnitte entlang der Linie B-B;
- Fig. 4: eine vergrößerte Detaildarstellung des Schlittens 42 aus Fig. 1;
- Fig. 5:: Detailansichten der Lagerungsmagnete aus Fig. 4;

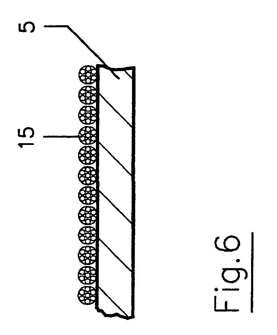

- Fig. 6: eine vergrößerte Detaildarstellung der bewickelten Seiltrommel aus Fig. 1;
- Fig. 7: eine vergrößerte Detaildarstellung aus Fig. 3;
- Fig. 8: eine vergrößerte Detaildarstellung des Seileinlaufes aus Fig. 1;
- Fig. 9: im Längsschnitt eine andere Variante eines Rückstellantriebes;
- Fig. 10: im Längsschnitt eine dritte Variante eines Rückstellantriebes;
- Fig. 11: im Längsschnitt eine vierte Variante eines Rückstellantriebes;
- Fig. 12:: Detaillösungen der Bremsmagnete.

### Weiterbildung mittels Magneten:

- Fig. 13:: die Bremsmagnete im Gehäuse,
- Fig. 14:: die Bremsmagnete in der Seiltrommel,
- Fig. 15:: eine Frontansicht der Seiltrommel der Fig. 14,
- Fig. 16:: Detaildarttellungen der Bremsmagnete,
- Fig. 17:: unterschiedlich magnetisierte Magnete,
- Fig. 18:: einen Schnitt durch eine weitere Ausführungsform eines Meßseil-Wegsensors,
- Fig. 19:: eine Ansicht der Seiltrommel aus Fig. 18 und
- Fig. 20:: eine weiter Bauform des Meßseilwegsensors.

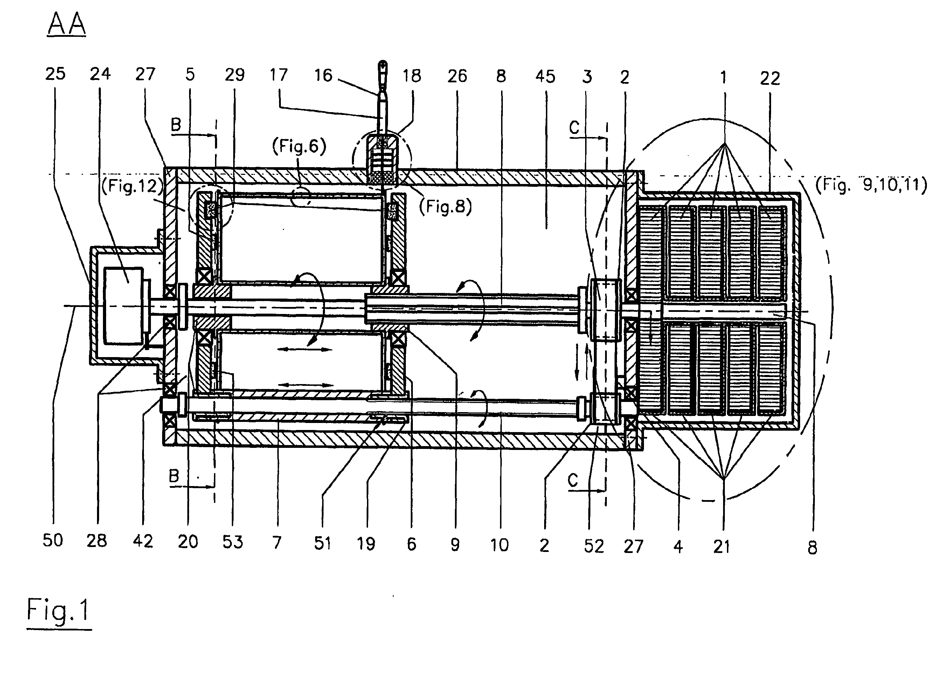

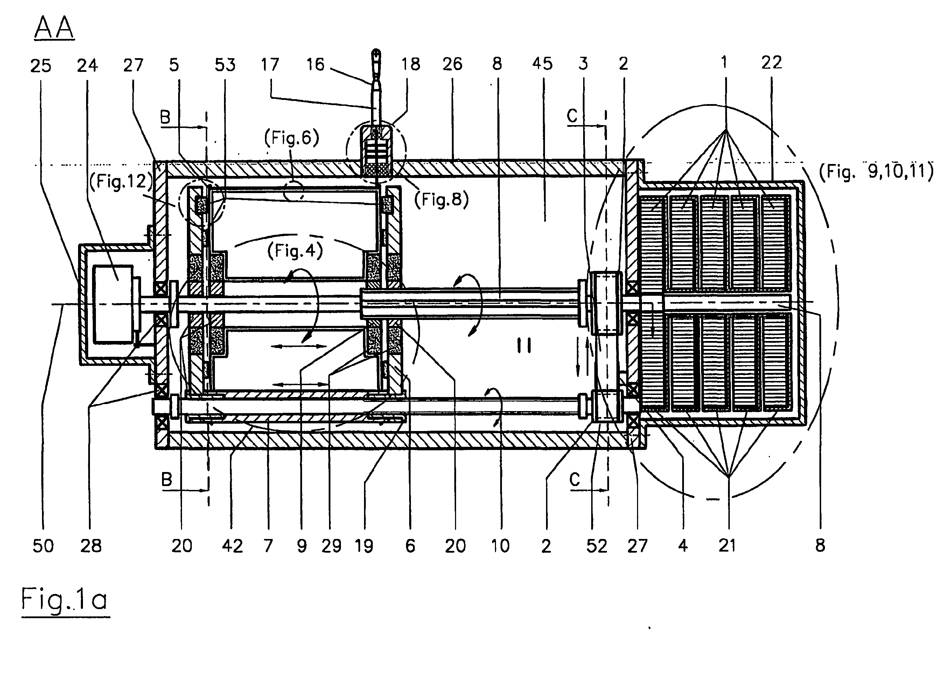

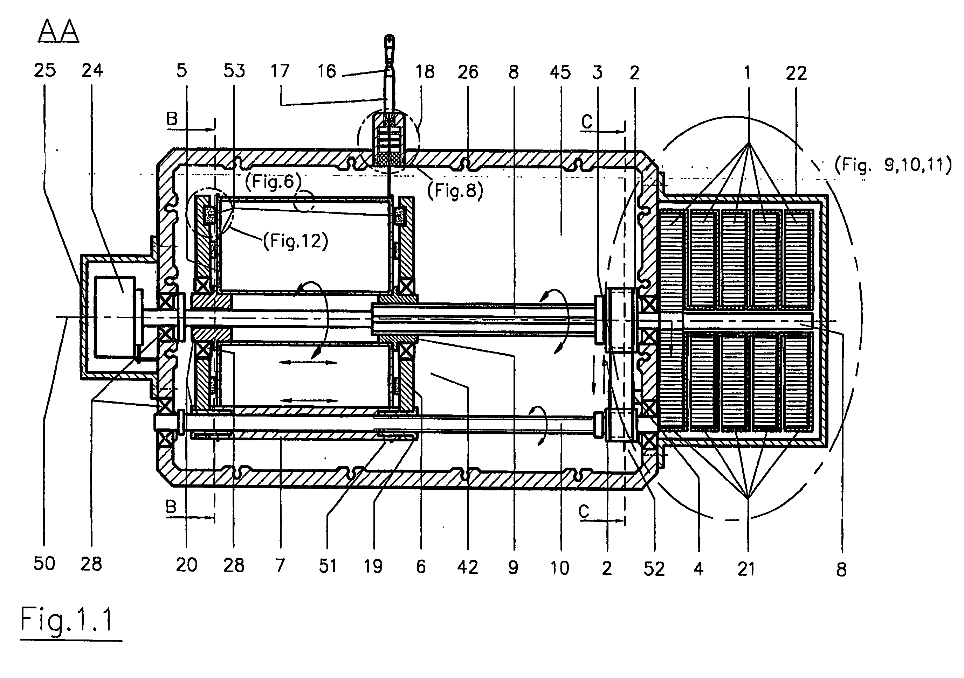

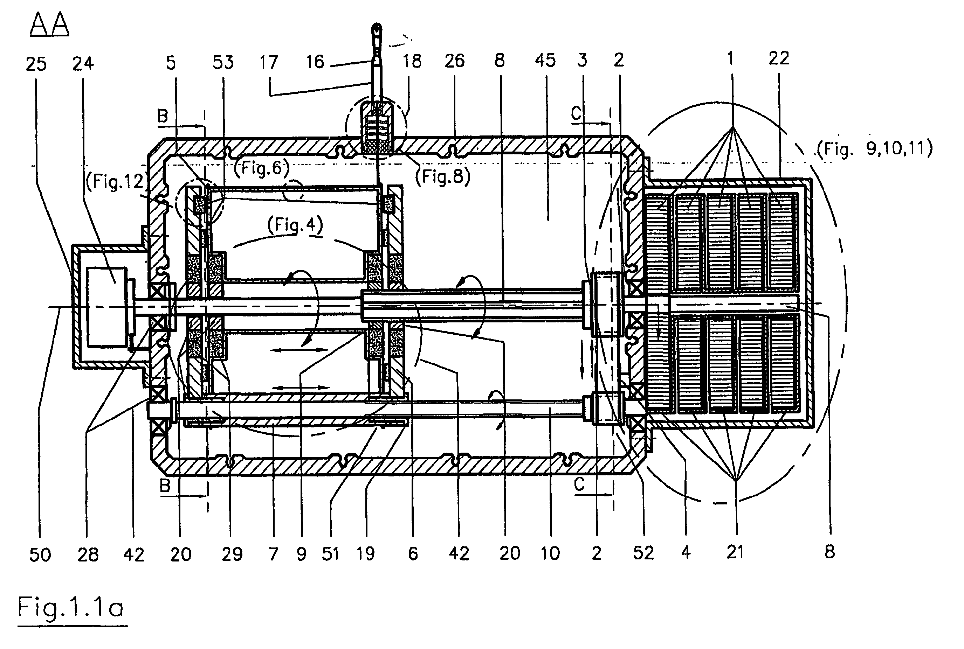

Fig. 1 zeigt einen erfindungsgemäßen Meßseil-Wegsensor in einer Schnittdarstellung entlang der Längsrichtung 50, die zusammenfällt mit der Drehachse der zentralen Welle 8, auf welcher die Seiltrommel 5 längsverschieblich aber drehfest gelagert ist. Die Welle 8 durchdringt die Stimplatten 27, die zusammen mit dem geschlossenen Profil 26 das Zentralgehäuse bilden, jeweils nach außen. Am einen, dem linken Ende ist auf der zentralen Welle 8, die in den Stirnplatten 27 auch gelagert ist, der Drehwinkelsensor 24 drehfest angeordnet, der mittels eines topfförmigen Sensorgehäuses 25 abgedeckt ist, welches mit den offenen Rändern an der linken Stirnplatte 27 befestigt, insbesondere verschraubt ist.

Auf dem anderen, dem rechten Ende der zentralen Welle 8 ist eine Flachformfederkaskade 1, bestehend aus mehreren axial hintereinander angeordneten Spiralfedern, angeordnet, die den Rückstellantrieb für die Seiltrommel 5 darstellt. Die einzelnen Spiralfedern sind jeweils in Einzelfedergehäusen 21 untergebracht, und insgesamt ist dieser Rückstellantrieb durch ein topfförmiges Federmotorgehäuse, welches mit der offenen Seite an der Außenfläche der rechten Stimplatte 27 befestigt ist, gegenüber der Umgebung abgedichtet.

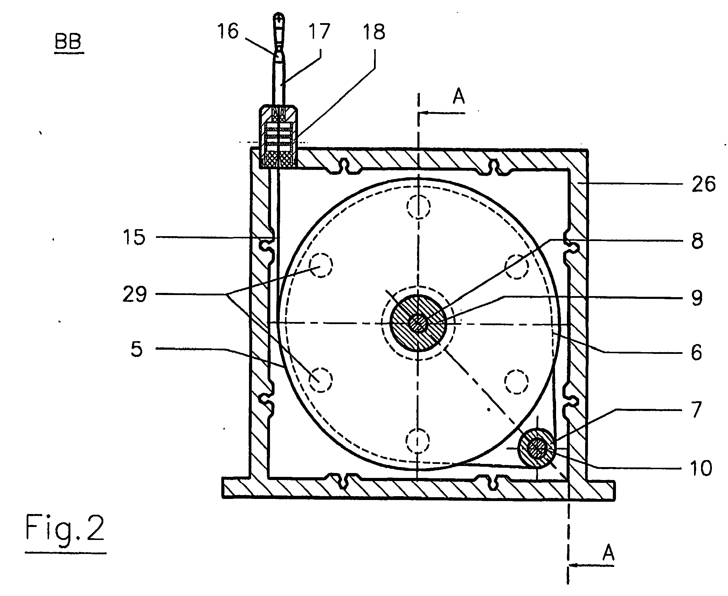

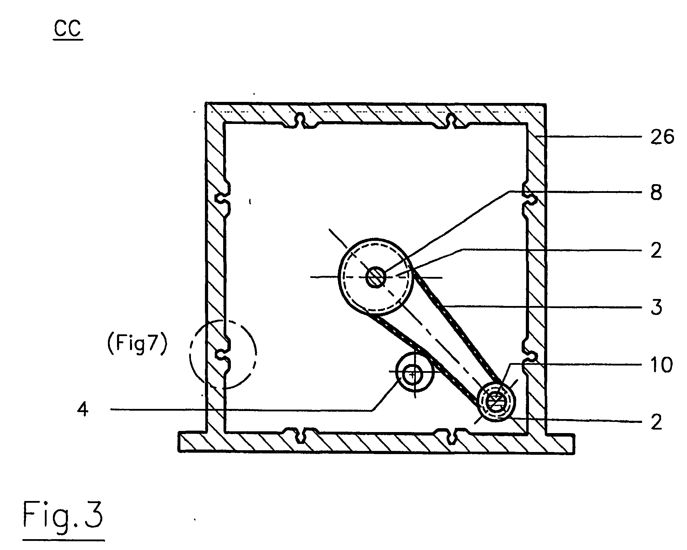

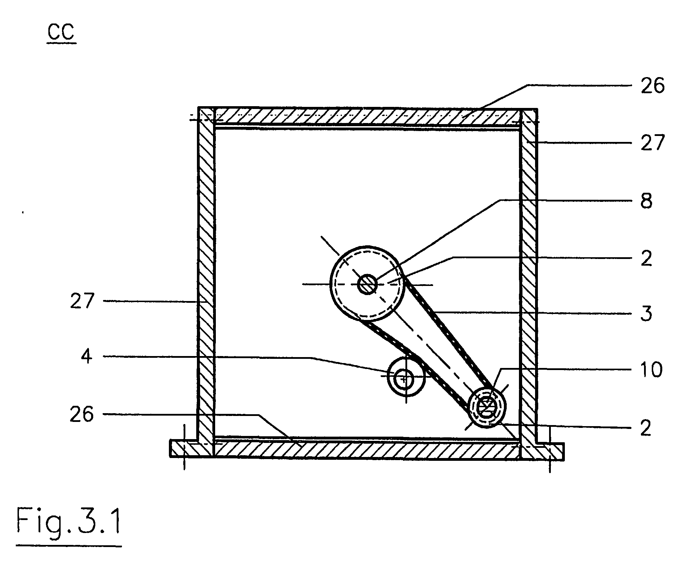

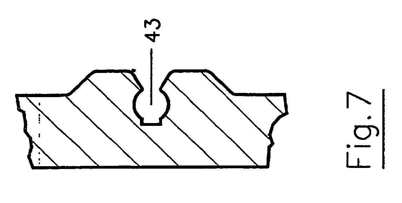

Das Zentralgehäuse wird durch ein geschlossenes Kastenprofil 26, welches als Strangpreßprofil herstellbar ist, gebildet, wie am besten in den Figuren 2 und 3 ersichtlich, auf welche stirnseitig die Stimplatten 27 aufgeschraubt werden. Dies geschieht mit Hilfe selbstschneidender, in den Zeichnungen nicht dargestellter Schrauben, die in die Schraubkanäle 43, welche in Längsrichtung 50 verlaufen, eingeschraubt werden. Die Schraubkanäle befinden sich - wie die Figuren 2 und 3 zeigen - auf den Innenseiten des Profils. Wie die vergrößerte Darstellung der Fig. 7 zeigt, handelt es sich um hinterschnittene Nuten mit einem annähernd kreisförmigen Querschnitt im hinterschnittenen Bereich, indem sich das Gewinde einer selbstschneidenden Schraube hineinschneiden kann.

Fig. 1.1 zeigt demgegenüber eine Lösung, bei welcher das Zentralgehäuse zwar ebenfalls aus geschlossenem, kastenförmigem Profil 26 mit Schraubkanälen 43 und darauf aufgesetzten Stimplatten 27 besteht, jedoch die Verlaufsrichtung des Kastenprofiles 26 quer zur Längsrichtung 50 und damit quer zur Richtung der Welle 8 verläuft, mithin die Deckelplatten 27 parallel zur Welle 8.

Der Vorteil liegt darin, daß bei Entfernen der Stimplatten 27 dadurch die Lagerungen der Zentralwelle 8 sowie der Gewindespindel 10 nicht beeinflußt werden.

Fig. 2 zeigt ferner die Anordnung des Seileinlaufes in Längsrichtung betrachtet in einer der Ecken des etwa quadratischen Profils 26, in Längsrichtung dagegen - wie in Fig. 1 ersichtlich - in der Mitte des Profils 26.

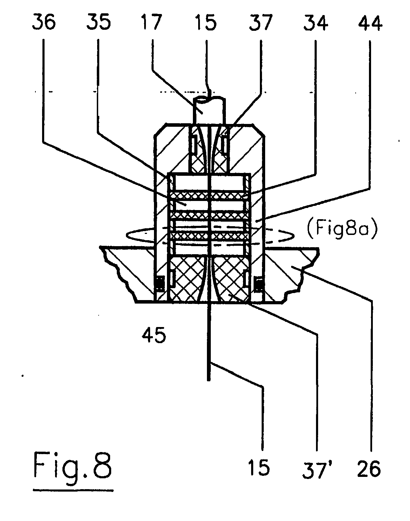

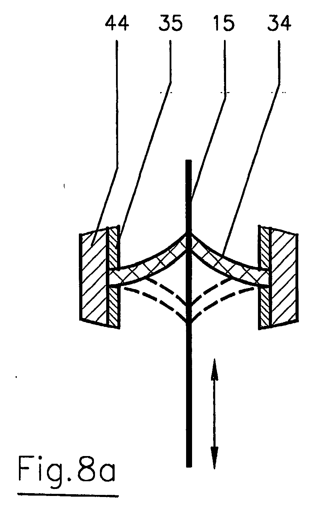

Der Seileinlauf ist in Fig. 8 in Vergrößerung dargestellt. Der topfförmige Grundkörper 44 weist eine Durchgangsöffnung im Boden dieser Topfform auf, und ist in eine entsprechende Öffnung des Profils 26 abgedichtet eingesetzt. In der kleinen Durchgangsöffnung befindet sich eine Seildurchführung aus einem hochverschleißfesten Material mit einer nach außen trichterförmig erweiternden Öffnung. An der engsten Stelle des Durchlasses reicht die Öffnung in der Seildurchführung 37 nahe an das Meßseil 15 heran.

In dem Bereich der Durchgangsöffnung des Grundkörpers 44 mit großem Querschnitt sind plattenförmige, quer zur Durchlaufrichtung des Meßseiles 15 liegende, Seilabstreifer 34 hintereinander, getrennt durch Abstandsringe 35, angeordnet und liegen mit ihrem Innendurchmesser ringförmig am Meßseil 35 an. In den dadurch entstehenden Hohlräumen 36 zwischen den einzelnen Seilabstreifern kann sich der abgestreifte Schmutz ablagern. Diese Hohlräume können auch mit Fett oder einem anderen den Schmutz bindenden Mittel gefüllt sein. Zum Innenraum 45 des Zentralgehäuses hin befindet sich in dem Grundkörper 44 eine weitere Seildurchführung 37', die eine ebenfalls trompetenförmig, diesmal zum Innenraum 45 hin, sich erweiternde Öffnung aufweist.

Fig. 8a zeigt, wie durch das Anliegen der Seilabstreifer 34 an dem Meßseil 15 die Seilabstreifer 34 entsprechend der Laufrichtung des Meßseiles 15 aufgrund der Gleitreibung am Meßseil in die entsprechende Richtung jeweils ausgeformt werden.

Fig. 1 zeigt die Seiltrommel 5 in der linken Endlage ihres Längsverschiebeweges. Die Seiltrommel 5 ist konzentrisch zu der Welle 8 angeordnet, die im Verschiebeweg der Seiltrommel 5 als Vielzahnwelle ausgebildet ist, wie am besten in Fig. 2 zu erkennen.

Die Seiltrommel 5 weist eine Durchgangsöffnung auf, in welcher eine hülsenförmige Vielzahnmutter drehfest mit der Seiltrommel 5 verbunden ist, deren Innenprofil längsverschieblich aber drehfest auf dem Außenprofil der Vielzahnwelle 8 sitzt. Die Flachformfederkaskade 1 spannt die Seiltrommel 5 in die Aufwickelrichtung vor, so daß in der in Fig. 1 dargestellten Endlage das Meßseil 15 vollständig auf der Meßseiltrommel 5 aufgewickelt ist, und daher das am Ende des Meßseiles dort befestigte Seilanschlagstück 16 an dem Dämpfungselement 17 des Seileinlaufs anliegt.

Durch Abziehen des Meßseiles 15 wird dieses von der Meßseiltrommel 5 abgewickelt, und dadurch über die drehfeste Verbindung mit der Vielzahnmutter 9 die Vielzahlwelle 8 in Drehung versetzt. Die am rechten Ende der Welle 8 auf dieser drehfest aufgebrachte Zahnriemenscheibe 2 versetzt über den Zahnriemen 3 und die weitere Zahnriemenscheibe 2, welche auf der Gewindespindel 10 drehfest aufgebracht ist, diese Gewindespindel 10 in Drehung. Die Gewindespindel 10 befindet sich - wie Fig. 2 und 3 zeigen - in einer der Ecken des rechteckigen Innenraumes 45 des Profils 26, und verläuft parallel zur zentralen Welle 8, die etwa in der Querschnittsmitte dieses Innenraumes angeordnet ist.

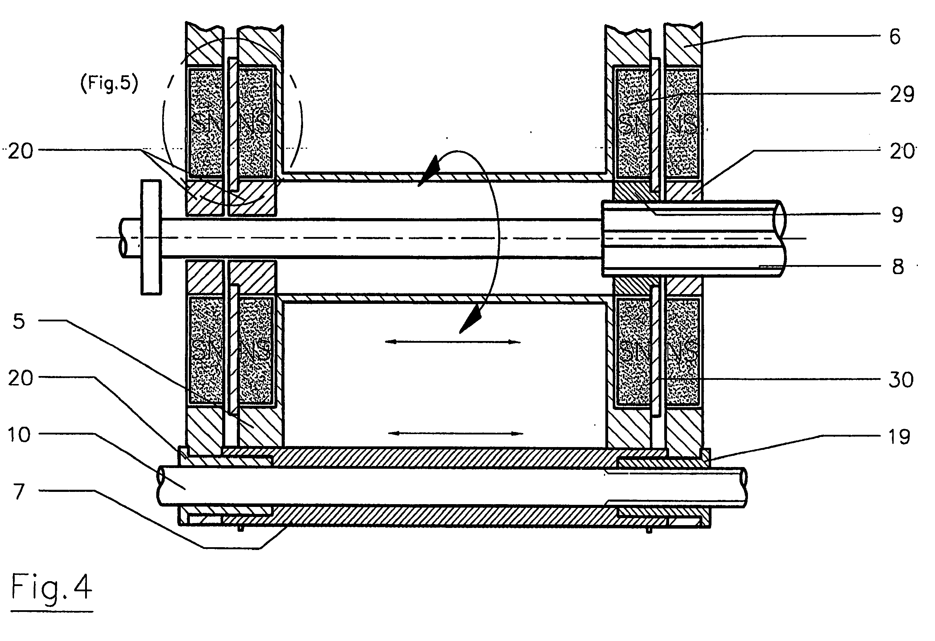

Wie am besten die vergrößerte Detaildarstellung der Fig. 4 aus Fig. 1 zeigt, ist die Seiltrommel 5 in Längsrichtung 50 zwischen den beiden quer zur Längsrichtung 50 angeordneten Endplatten 6 eines Schlittens 42 angeordnet, der ein die Endplatten 6 verbindendes Kulissenrohrstück 7 aufweist, welches auf der Gewindespindel 10 sitzt. Das Kulissenrohrstück 7 und die Endplatten 6 sind durch Buchsen miteinander verbunden, von denen die linke als Gleitlagerbuchse 20 gegenüber der in diesem Bereich glatten, gewindelosen Außenkontur der Gewindespindel 10 ausgebildet ist, die rechte dagegen als Spindelmutter 19, die mit dem Außengewinde der Gewindespindel 10 zusammenwirkt.

In den Endplatten 6 befinden sich fluchtend zur zentralen Welle 8 Aufnahmebohrungen, in denen die Vielzahnmutter 9, die aus zwei von den Stirnseiten der einschiebbaren Einzelteilen bestehen kann, über Rillenkugellager 28 oder Gleitlager radial gelagert ist.

Das Maß der Längsverschiebung des Schlittens 42 und damit der Seiltrommel 5 pro Umdrehung der Seiltrommel 5 wird somit einerseits durch die Steigung des Gewindes der Gewindespindel 10 sowie der Spindelmutter 19 bestimmt, andererseits jedoch auch durch das Übersetzungsverhältnis des zusätzlichen Getriebes 52, bestehend aus den beiden Zahnriemenscheiben 2 und dem Zahnriemen 3.

Das Übersetzungsverhältnis dieses Zahnriemen-Getriebes 52 kann durch Austausch einer oder beider der Zahnriemenscheiben mit größerem oder kleinerem Durchmesser auf einfache Art und Weise verändert werden. Um die sich dadurch verändernde Umschlingungslänge auszugleichen, ist - wie in Fig. 3 zu erkennen - eine Spannrolle 4 an dem Zahnriemen 3 angreifend angeordnet mit einer exzentrischen Außenkontur, so daß durch Verdrehen der Zahnriemen 3 in eine gespannte Position ausgelenkt werden kann.

Fig. 3.1 zeigt eine Querschnittsdarstellung analog zur Fig. 3, jedoch geschnitten bei den Lösungen der Figuren 1.1 sowie 1.1a, also einem Verlauf des Profiles 26 einschließlich dessen Schraubkanälen 43 quer zur Längsrichtung der Welle 8.

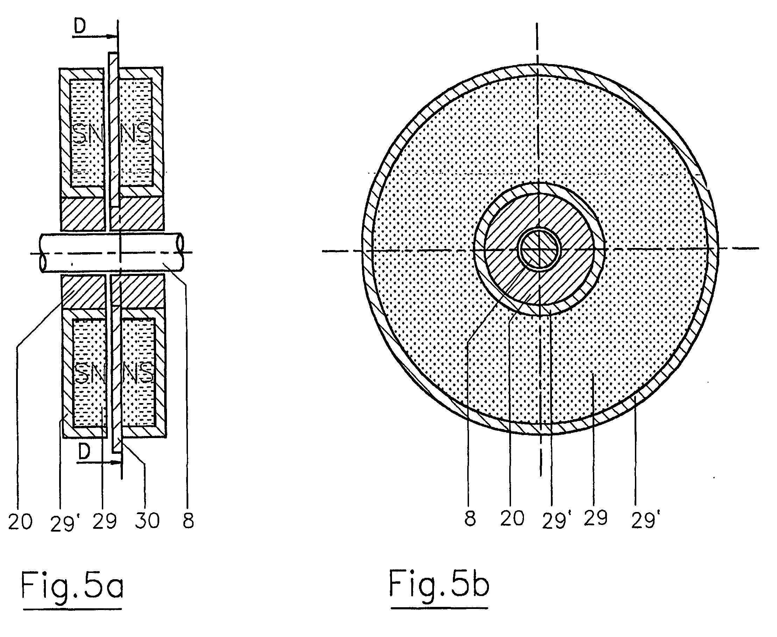

Durch geeignete Wahl der Übersetzung des zusätzlichen Getriebes 52 kann - je nach Dicke des verwendeten Meßseiles 15 - die Längsverschiebung der Seiltrommel 5 so eirigestellt werden, daß - wie in der vergrößerten Darstellung der Fig. 5 ersichtlich - die einzelnen Wicklungen des Meßseiles 15 auf der Meßseiltrommel 5 eng nebeneinander, jedoch ohne gegenseitigen Kontakt zu liegen kommen. Dadurch wird der Verschleiß des Meßseiles reduziert.

Fig. 4 zeigt ferner, daß anstelle der axial wirkenden Rillenkugellager 28 der Fig. 1 die Meßseiltrommel 5 auch berührungsfrei gegenüber den Endplatten 6 des Schlittens 42 geführt sein kann:
Die axiale Führung ist dadurch gegeben, daß die in Fig. 4 nur an der rechten Stirnseite vorhandene Vielzahnmutter 9, auf der die Seiltrommel 5 drehfest sitzt, paßgenau, also radial fest und lediglich axial verschiebbar, auf der Vielzahnwelle 8 geführt ist. Um dabei stirnseitig nicht an der linken oder rechten Endplatte 6 zu schleifen, ist die axiale Lagerung zwischen den beiden Endplatten 6 durch Permanentmagnete 29 gewährleistet: Diese sind - mit Ausrichtung ihrer Pole in Längsrichtung 50 - einerseits in den stirnseitigen Außenflächen der Meßseiltrommel 5 auf beiden Seiten angeordnet, und andererseits auf den gegen die Seiltrommel 5 weisenden Innenseiten der Endplatten 6. Vorzugsweise sind die Permanentmagnete 29 ringförmig konzentrisch um die zentrale Welle 8 herum angeordnet.

Die Magnete der Meßseiltrommel 5 einerseits und der jeweiligen Endplatte 6 andererseits sind mit dem gleichen Pol gegeneinander gerichtet, so daß sie sich gegenseitig abstoßen. Dadurch stellt sich die Meßseiltrommel 5 automatisch in der Mitte zwischen den beiden Endplatten 6 ein.

Wie Fig. 5a in der Seitenansicht und Fig. 5b in der Aufsicht im Detail zeigen, können die Magnete 29 durch topfförmige Polschuhe 29', die als Flußleitstücke wirken und z. B. aus Weicheisen bestehen, umgeben sein. Die offene Seite des Polschuhes weist zum gegenüberliegenden Magneten.

Für den Falle des Versagens oder der nicht ausreichenden Abstoßungskraft der Permanentmagnete 29 sind zusätzlich stimseitig an der Meßseiltrommel 5 Anlaufscheiben 30 aus reibungsarmem Material, beispielsweise Teflon oder einem anderen Kunststoff, angeordnet.

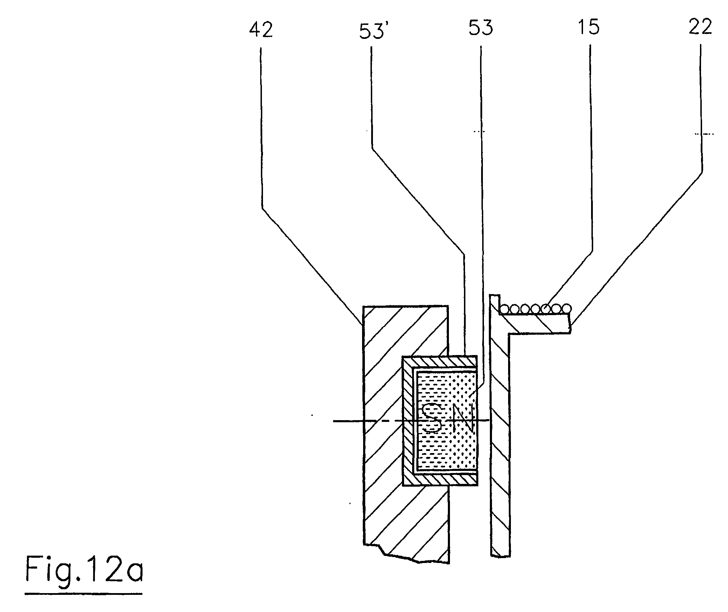

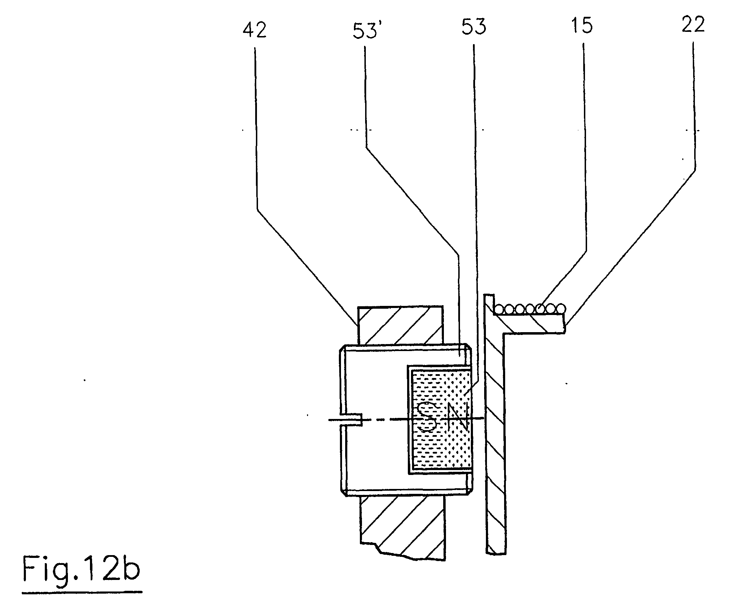

Die Lösung gemäß Fig. 1a unterscheidet sich von derjenigen gemäß Fig. 1 und ebenso die Lösung gemäß Fig. 1.1a von derjenigen gemäß Fig. 1.1 durch Bremsmagnete 53, die zwischen der Meßseiltrommel 5 und den Stirnplatten 6 des Schlittens 42 wirken, und zu diesem Zweck an den Stirnplatten 6 nahe am Außenumfang der Meßseiltrommel 5 angeordnet sind, und gegen deren Stimplatten gerichtet sind, wie im Detail besser in den Figuren 12a und 12b ersichtlich. Diese Bremsmagnete 53 bewirken sowohl beim Abziehen als auch beim Aufwickeln des Meßseiles auf der Meßseiltrommel 5 deren Bremsung, und somit ein definiertes, sauberes Auf- und Abwickeln des Meßseiles 15. Gemäß Fig. 12a ist der Bremsmagnet 53 von einem topfförmigen Polschuh 53' umgeben, und gemäß Fig. 12b ist der Polschuh 53 gleichzeitig als Gewindebolzen ausgebildet und mit seinem Außengewinde in Längsrichtung in den Schlitten 42 verschraubbar, wodurch der Abstand gegenüber der Meßseiltrommel 5 und damit die Bremswirkung einstellbar wird.

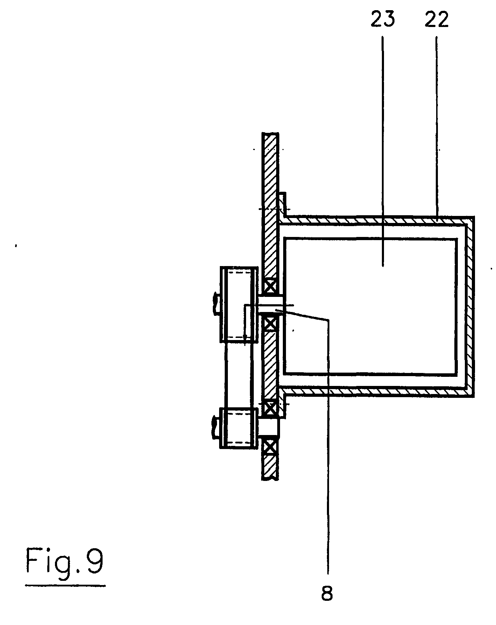

Die Figuren 9 - 11 zeigen andere Lösungen für den Rückstellantrieb anstelle der in Fig. 1 eingezeichneten Flachformfederkaskade 1. Gemäß Fig. 9 wird statt dessen ein Elektromotor 23 mit entsprechender Steuerung verwendet, der - analog zur Federkaskade 1 - koaxial auf dem rechten Ende der Welle 8 sitzt und von einem entsprechenden topfförmigen Motorgehäuse 22 abgedeckt ist.

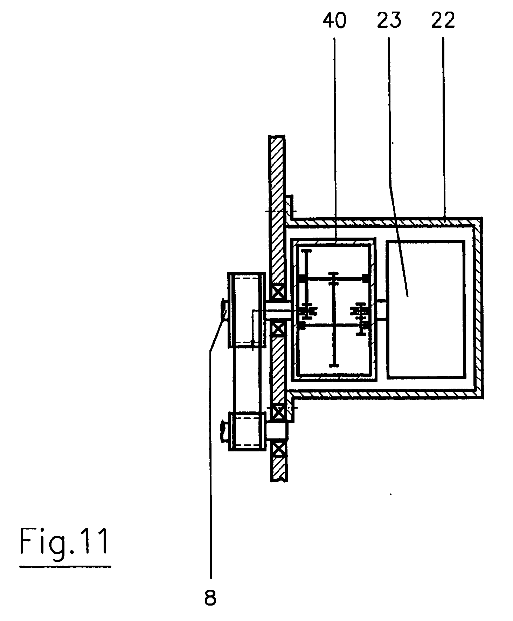

Bei der Lösung gemäß Fig. 11 ist der Elektromotor 23 nicht direkt mit der Welle 8 verbunden, sondern ein Getriebe 40, insbesondere ein Zahnradgetriebe, zur geeigneten Über- oder Untersetzung zwischengeordnet.

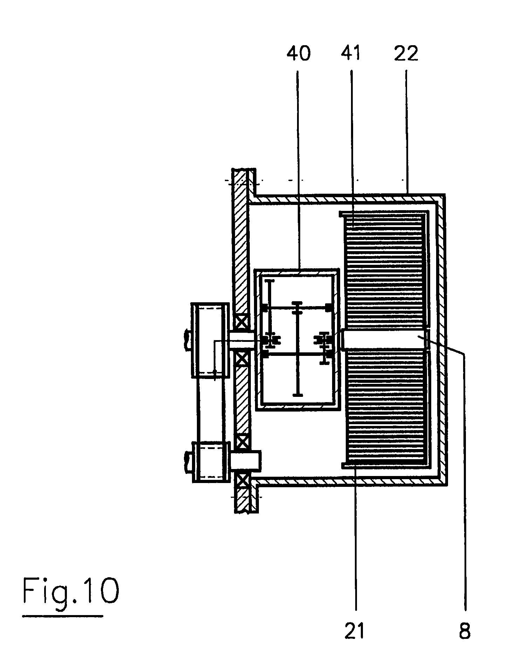

Bei der Lösung gemäß Fig. 10 ist ein solches Getriebe 40, insbesondere ein Zahnradgetriebe, zwischen einer Spiralfeder 41 bzw. einer Flachformfeder und der Welle 8 zwischengeordnet.

### Weiterbildung mittels Magneten:

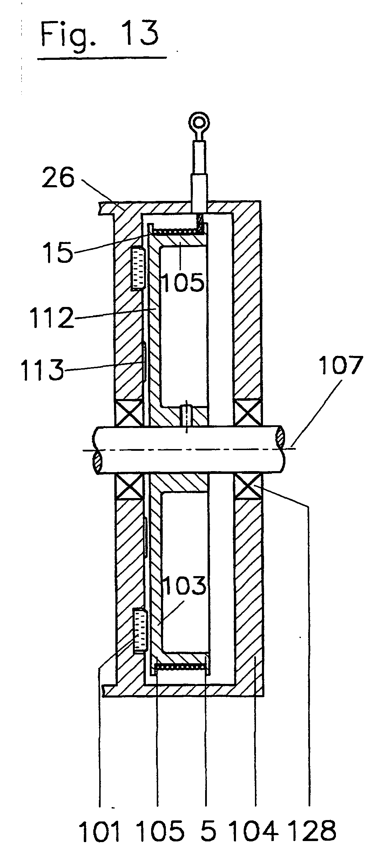

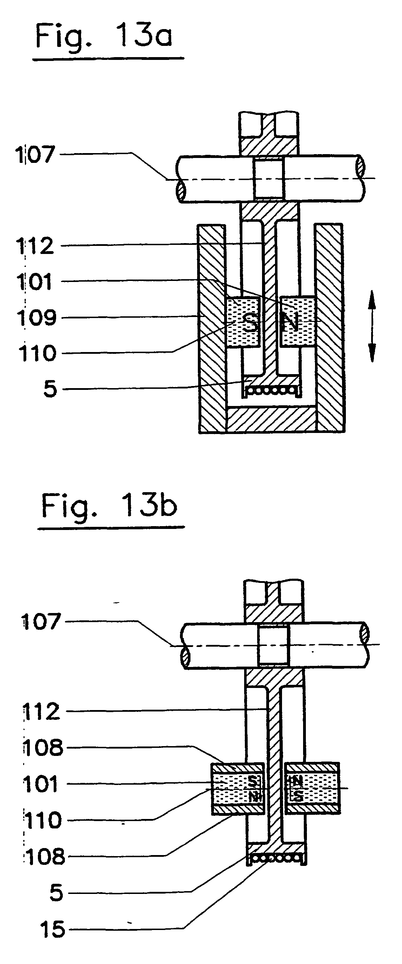

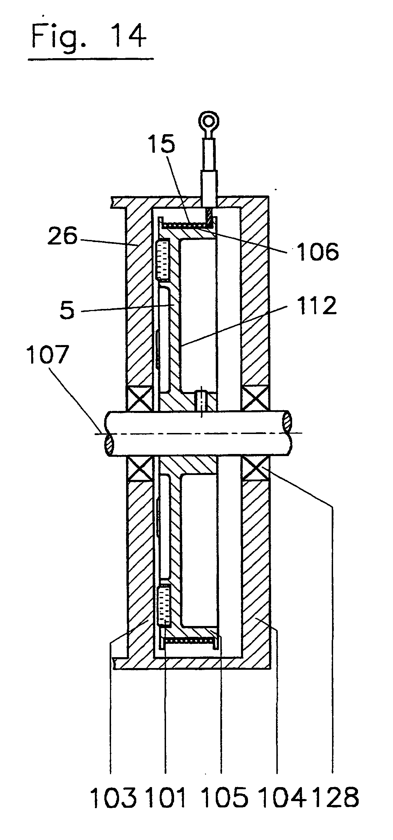

Die Fig. 13 und 14 zeigen jeweils die Seiltrommel 5, die auf reiner Welle befestigt ist und damit um ihre Rotationsachse 107 rotieren kann. Zu diesem Zweck ist die Welle mittels Lagern 128 im Gehäuse gelagert, welches aus einem kastenförmigen, vorzugsweise geschlossenen, Profil 26 besteht.

Die Seiltrommel 5 besteht aus einem Wickelzylinder 105, der radial nach außen weisende, begrenzende Anschläge an beiden Stirnseiten für das auf der Wickelfläche 106, dem Außenumfang des Wickelzylinders 105, aufzuwickelnde Meßseil 15 aufweist. Der Wickelzylinder 105 geht einstufig über einzelne Speichen oder eine Speichenplatte in den Nabenbereich der Wickeltrommel über.

Während in Fig. 13 die Speichen bzw. Trommelplatte 112 mit dem einen axialen Ende des Wickelzylinders 105 und damit der Seiltrommel 5 zusammenfällt und damit nahe an der linken Wand des Gehäuses des Profiles 26 liegt, ist diese Trommelplatte 112 bei der Lösung gem. Fig. 14 vom äußeren axialen Rand etwas zurückversetzt.

Entsprechend sind in Fig. 13 der mindestens eine Bremsmagnet 101 in derjenigen Wand des Profiles 26 angeordnet, die der Trommelplatte 112 in geringem axialem Abstand gegenübersteht, so daß nur ein geringer Luftspalt zwischen den Bremsmagneten 101 und der Trommelplatte 112 besteht.

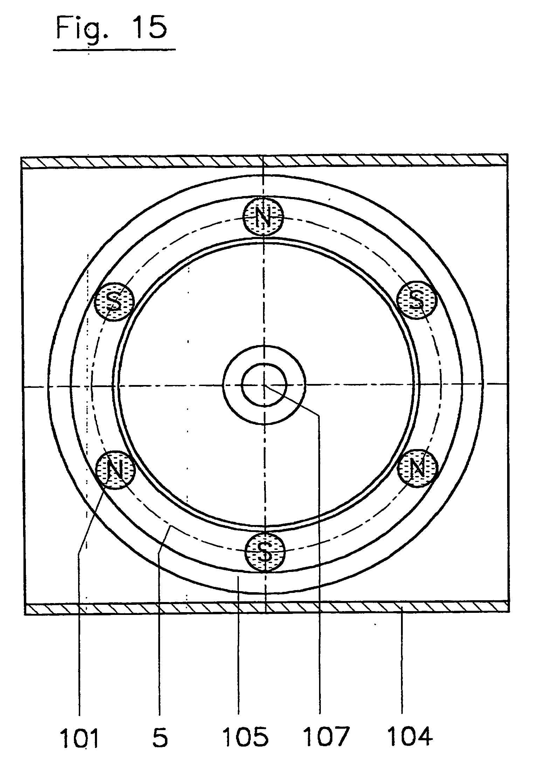

Der bzw. die Bremsmagnete 101 sind im radial äußeren Bereich der Seiltrommel 5, nahe an oder im Bereich deren Wickelzylinder 105, angeordnet, und zwar über den Umfang verteilt, wie Fig. 15 zeigt.

Eine Erhebung an dieser Wand des Gehäuses 104 dient als Kontaktschutz 113, also zur Verhinderung des Anhaftens der Seiltrommel 5 an den Bremsmagneten 101 in axialer Richtung.

Wie die Detaildarstellung der Fig. 13a zeigt, können - vor allem bei in axialer Richtung mittig stehender Trommelplatte 112 - die Bremsmagnete 101 von beiden Seiten aus in axialer Richtung fluchtend gegen diese Trommelplatte 112 gerichtet sein. Die beiden Bremsmagnete 101, die mit unterschiedlichen Polen gegen die Trommelplatte 112 gerichtet sind, können auf den Innenseiten eines U-förmigen Magnethalters 109 befestigt sein, welcher das radial äußere Ende der Seiltrommel 5 umgreift, und dabei insbesondere auch in radialer Richtung verlagerbar ist zur Veränderung der Bremskraft.

Die Detaillösung gemäß Fig. 13b zeigt ebenfalls von beiden axialen Richtungen gegen die Trommelplatte 112 gerichtete Bremsmagnete 101, die jedoch - im Gegensatz zu den Bremsmagneten 101 in Fig. 13a - eine Magnetisierungsachse 110 parallel zur Trommelplatte 112, nämlich in Radialrichtung der Trommelplatte, aufweisen, und jeweils außen von plattenförmigen Polschuhen 108 umgeben sind.

Im Gegensatz dazu sind bei der Lösung gem. Fig. 14 die Bremsmagnete 101 in der Trommelplatte 112 unmittelbar radial innerhalb des Wichelzylinders 105 der Seiltrommel 105 angeordnet, und weisen gegen die in geringem Abstand gegenüberliegende Wand des Profiles 26. Auch hier ist durch eine Erhöhung ein Kontaktschutz 113 ausgebildet, dieses Mal jedoch an der Seiltrommel 5.

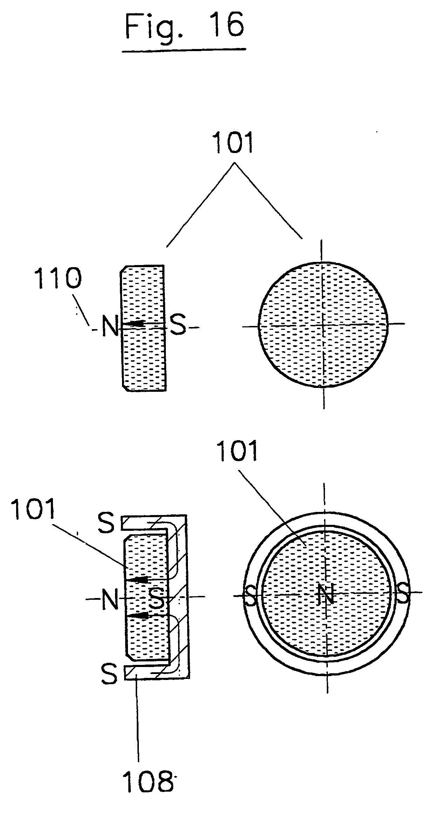

In beiden Fällen werden Magnete als Bremsmagnete 101 eingesetzt, die in Fig. 16 in zwei Versionen in Front- und Seitenansicht dargestellt sind. Dabei ist ersichtlich, daß in beiden Fällen der eigentliche Bremsmagnet 101 in Durchgangsrichtung durch die Dicke der Scheibe magnetisiert ist, so daß die eine Stimfläche den Nordpol und die andere den Südpol darstellt. Bei der in Fig. 16 unteren Ausführungsform ist dabei der Südpol sowie der Umfang des scheibenförmigen Magnetes durch einen topfförmigen einstückigen Polschuh 108 aus Weicheisen abgedeckt, wodurch in der Funktion der Südpol dieses Magneten verlagert wird, indem die Feldlinien außerhalb des Südpoles durch den Polschuh 108 hindurch zur offenen Frontseite des topfförmigen Polschuhes geführt werden.

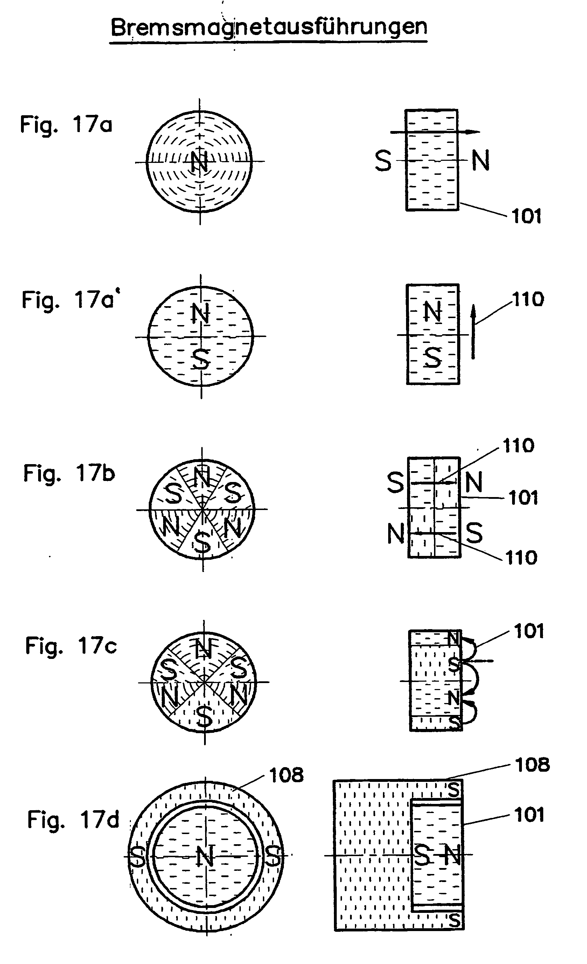

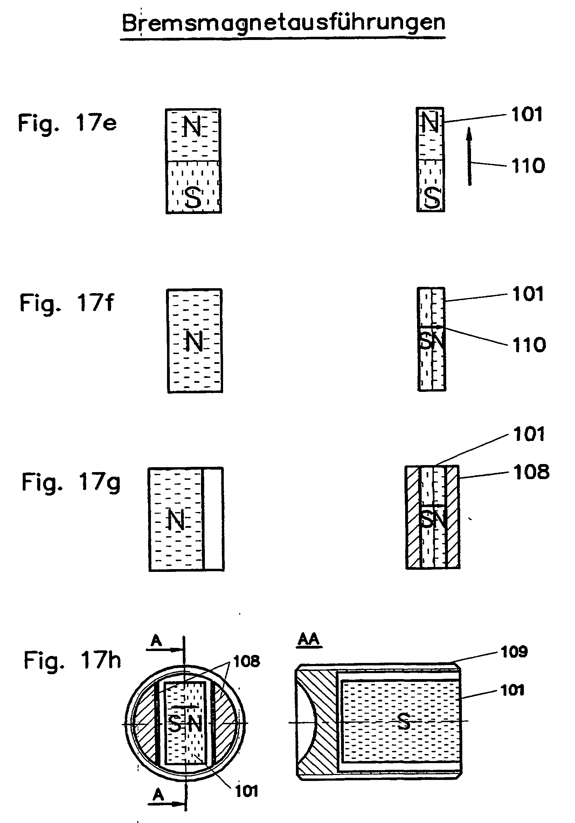

Fig. 17 zeigen unterschiedliche Magnetisierungsarten von scheibenförmigen Magneten. Dabei entspricht Fig. 17a der Lösung gem. Fig. 16, wobei jeweils die gesamte Stimftäche der Scheibe einem Pol, also Nordpol oder Südpol, entspricht. Die Axialrichtung der Scheibe ist somit die Magnetisierungsachse. Im Gegensatz dazu ist in Fig. 17a' die Magnetisierungsachse parallel zur Scheibenebene.

Bei einer Lösung gem. Fig. 17b ist die Magnetisierungsachse 110 zwar ebenfalls parallel zur dicken Abmessung der Scheibe, jedoch ist der Scheibenumfang in mehrere, in diesem Fall sechs, Sektoren unterteilt, und jeder Sektor separat in Durchgangrichtung magnetisiert, jedoch mit in Umfangsrichtung abwechselnder Polung, so daß auf einer Stirnseite über den Umfang verteilt, sechs verschiedene, einander abwechselnde Pole vorliegen, gleiches auf der gegenüberliegenden Stimseite (axial sektorenförmig durchmagnetisiert).

Fig. 17c zeigt eine ähnliche sektorenförmig unterschiedliche Magnetisierung in Umfangsrichtung, jedoch ist hierbei die Scheibe des Magneten in Durchgangsrichtung nicht durchmagnetisiert, sondern nur eine der Stirnflächen insgesamt magnetisiert, so daß diese magnetisierte Stirnfläche als eine in Umfangsrichtung betrachtet als Aneinanderreihung von unterschiedlich geformten Stabmagneten betrachtet werden kann (sektorenförmig laterale Magnetisierung auf einer Fläche).

Fig. 17d zeigt den Magneten der Fig. 17a, umgeben von einem topfförmigen Polschuh, wie er auch bereits in Fig. 16, untere Darstellung, dargestellt und beschrieben ist.

Die Figuren 17e-17h zeigen dagegen Stabmagnete. Bei der Lösung in Fig. 17e ist die Längsrichtung des Stabes die Magnetisierungsrichtung, also mit dem Nordpol am einen schmalseitigen Ende und dem Südpol am gegenüberliegenden schmalseitigen Ende.

In Fig. 17f verläuft dagegen die Magnetisierungsrichtung 110 quer zur Längserstreckung des Stabmagneten, also mit dem Nordpol auf der einen Breitseite und dem Südpol auf der anderen Breitseite.

Gleiches gilt auch für den Magneten gemäß Fig. 17g, der zusätzlich von einem U-förmigen Polschuh 108, vorzugsweise aus Weicheisen, umgeben ist, dessen frei endende Schenkel parallel zu den Südpol- und Nordpolflächen angeordnet sind.

Eine solche Lösung zeigt prinzipiell auch die Fig. 17h, bei der jedoch die Außenkonturen der Polschuhe 108 in der Aufsicht betrachtet so konvex gekrümmt sind, daß ein insgesamt etwa runder Außenumfang entsteht.

Dadurch können Magnet 101 und die beiden Polschuhe 108 gemeinsam in eine zylindrische stirnseitige Bohrung eines Magnethalters 109 eingesetzt werden, der an seinem ebenfalls zylindrischen Außenumfang ein Außengewinde zum Einschrauben in eine Befestigungsöffnung aufweist.

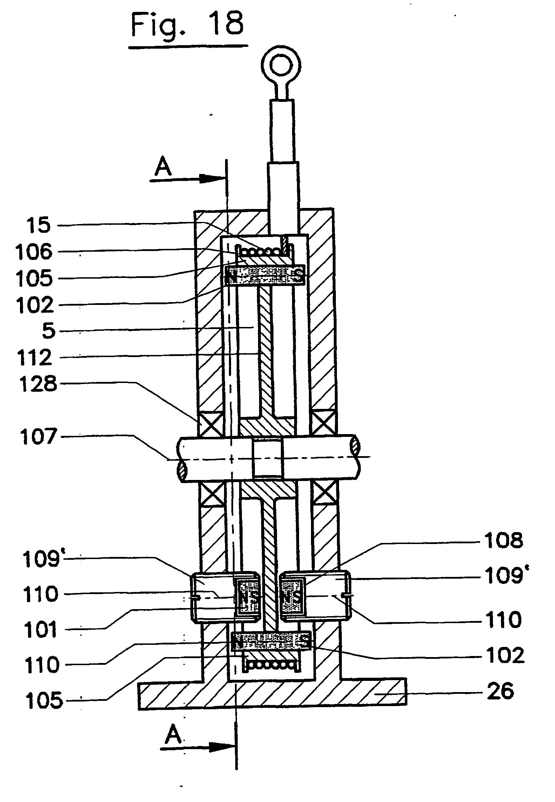

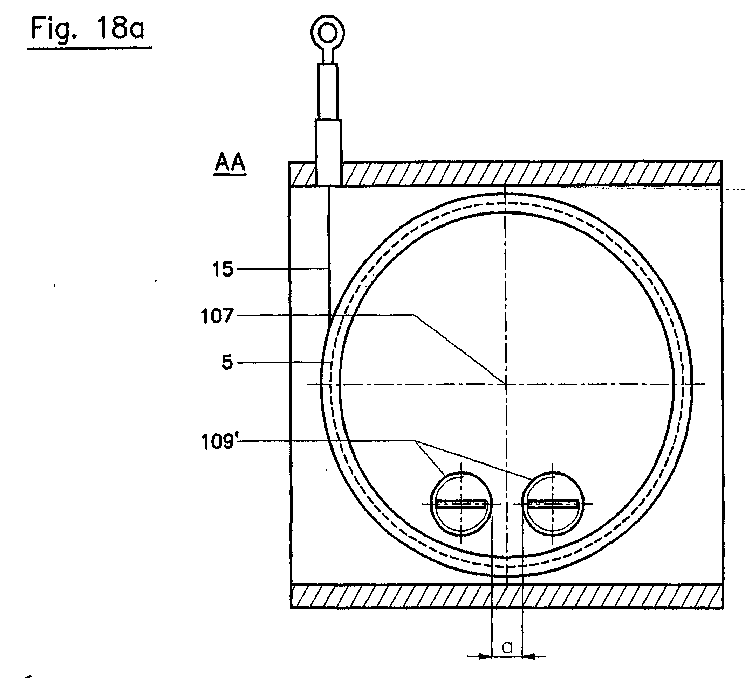

Fig. 18 zeigt wiederum eine Schnittdarstellung entlang der Rotationsachse 107.

Auch hier ist die Seiltrommel 5 mittels ihrer Achse und Lagern 128 in den Seitenwänden eines Profiles 26 gelagert, welches als Gehäuse dient.

Im Gegensatz zu den Lösungen von Fig. 13 oder Fig. 14 ist die Speichenplatte 112 der Seiltrommel 5 in axialer Richtung mittig zu dem Wickelzylinder 105 angeordnet, dessen Außenfläche, die Wickelfläche 106, von einem Meßseil 15 bewickelt, dargestellt ist. In der unteren Bildhälfte der Fig. 18 sind an der Innenfläche des Wickelzylinders 105 bzgl. der Speichenplatte 112 gegenüberliegend zwei stabförmige Haltemagnete 102 angeordnet, die mit entgegengesetzten Polen gegeneinander, also gegen die Trommelplatte 112, weisen. Die Haltemagnete 102 stehen dabei vorzugsweise in Längsrichtung etwas über die Außenwachen der Seiltrommel 5 vor.

Um die Seiltrommel 5 nicht unwuchtig werden zu lassen, ist das gleiche Paar von Haltemagneten 102 auf der bzgl. der Rotationsachse 107 der Seiltrommel 5 gegenüberliegenden Seite ebenfalls auf der radial innenliegenden Fläche des Seilzylinders 105 angeordnet. Die Befestigung erfolgt dabei vorzugsweise durch Kleben.

Auch eine Durchbohrung der Trommelplatte 112 in Längsrichtung und Hindurchstecken eines einzigen anstelle der beiden fluchtenden Stabmagnete als Haltemagnet 102 ist denkbar.

Fig. 18 weist jedoch zusätzlich in der unteren Bildhälfte auch ein Paar von Bremsmagneten 101 auf. Diese sind jedoch an den Seitenwänden des Profiles 26 angeordnet und reichen - radial innerhalb des Wickelzylinders 105 - bis nahe an die Trommelplatte 112 der Seiltrommel 5 heran. Zur Einstellbarkeit des Luftspaltes dazwischen sind die beiden Bremsmagnete 101 - die wiederum mit ihrer Magnetisierungsrichtung parallel zur Rotationsachse 107 angeordnet und mit entgegengesetzten Polen aufeinander zu ausgerichtet sind - jeweils in Vertiefungen in den aufeinander zu gerichteten Stirnseiten von Magnethaltem 109 angeordnet, welche ein Außengewinde aufweisen, mit dessen Hilfe sie in einer entsprechenden, axial verlaufenden Gewindebohrung durch die Wandung des Profiles hindurch verschraubbar und damit hinsichtlich der Größe des Luftspaltes einstellbar sind.

Die beiden Bremsmagnete 101 befinden sich dabei zur Steigerung der Magnetkraft jeweils in einem topfförmigen Polschuh 108, dessen offene Seite hierbei jeweils ebenfalls in Richtung auf die Trommelplatte 112 und damit auf den gegenüberliegenden Bremsmagneten 101 zugerichtet sind.

Die Seitenansicht dieser Lösung in Fig. 18a zeigt weiterhin die Möglichkeit, entlang des Umfanges verteilt nicht nur einen, sondern mehrere solche Bremsmagnete 101 in Magnethaltem 109 in den Wänden des Profiles 26 anzuordnen, wobei ein Mindestabstand a dazwischen eingehalten werden muß, um eine negative gegenseitige Beeinflussung der Bremsmagnete 110 zu verhindern.

Fig. 18a zeigt ferner, daß nicht unbedingt eine über den Umfang gleichmäßige Verteilung der Bremsmagnete 101 bzw. Magnethalter 109 vorhanden werden muß.

Die Haltemagnete 102 sind dabei aus Übersichtlichkeitsgründen nicht eingezeichnet.

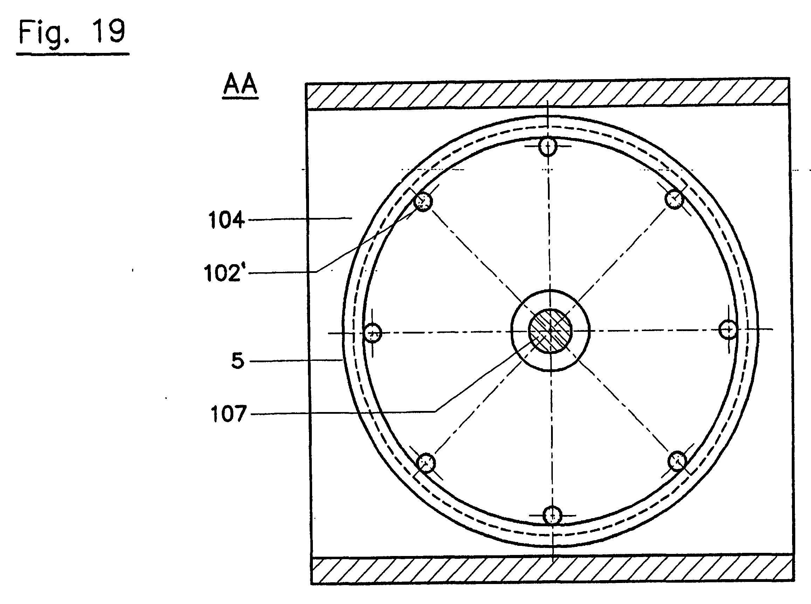

Fig. 19 zeigt eine andere Frontansicht auf die Seiltrommel 5 gem. der Linie A-A der Fig. 18.

Durch entsprechende Schnittführung sind dabei in Fig. 19 ausschließlich die Haltemagnete 102 an der Seiltrommel 5 zu erkennen, von denen acht Stück in einem Abstand von jeweils 45 Grad angeordnet sind. Diese Darstellung soll verdeutlichen, daß bei der Wahl ausreichend starker Haftmagnete 102 diese Magnete als Kombimagnete 102' dienen können, sofern deren Luftspalt zum benachbarten Gehäuse, insbesondere der Gehäuseseitenwand des Profiles 26, richtig dimensioniert ist. In diesem Fall kann vollständig auf zusätzliche separate Bremsmagnete verzichtet werden.

Unabhängig davon funktionieren alle dargestellten Lösungen immer nur unter der Grundvoraussetzung, daß
- bei den Haltemagneten das durch die Magnete beaufschlagte Meßseil 15 aus einem magnetisierbaren Material bestehen muß, bzw.
- bei den Bremsmagneten das beeinflußte Bauteil (also bei Anordnung der Bremsmagnete an der Seiltrommel das Gehäuse oder bei Anordnung der Bremsmagneten am Gehäuse die Seiltrommel (wenigstens im beeinflußten Bereich) aus elektrisch leitfähigem Material bestehen muß oder beschichtet sein muß.

Bei Verwendung von Kombimagneten gelten diese Bedingungen kumulativ.

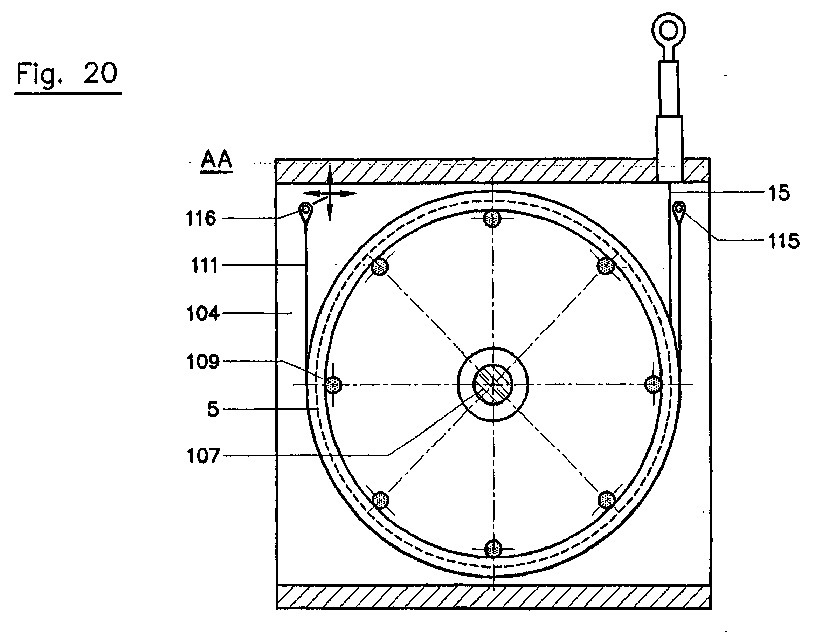

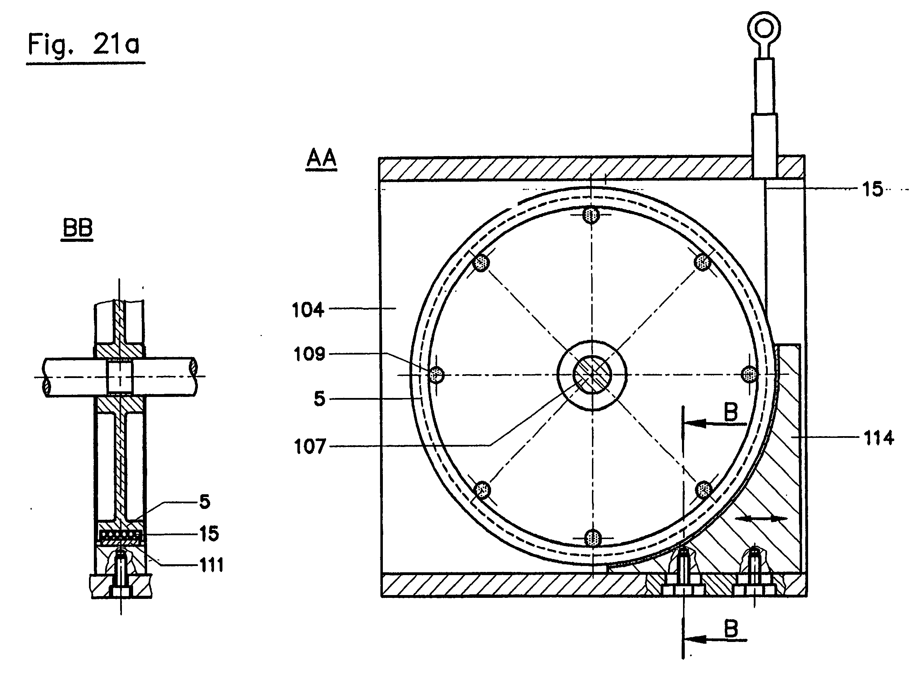

Fig. 20 zeigt eine Lösung, die sich gegenüber Fig. 19 durch ein zusätzliches Gleitband 111 unterscheidet. Dieses (endliche) "Gleitband" besteht in der Regel aus Filz oder einem anderen gut schwingungsdämpfenden Textilmaterial und ist um den vom Seileintauf abgewandten Teil, insbesondere einen Bereich von etwa 180°, der Seiltrommel 5 herumgelegt. Zu diesem Zweck ist das eine Ende des Gleitbandes 111 an einem Festpunkt 115 nahe des Seileinlaufs am Gehäuse befestigt, während das andere Ende um einen Verstellpunkt 116 auf der gegenüberliegenden Seite der Rotationsachse 107 der Seiltrommel 5 am Gehäuse festgelegt ist. Der Verstellpunkt 116 kann dabei sowohl tangential als auch radial bzgl. der Achse 107 der Seiltrommel 5 verlagert werden, insbesondere in zwei aufeinanderstehenden senkrecht stehenden Richtungen jeweils quer zur Rotationsachse 107.

Dadurch kann der im Ausgangszustand lose oder völlig fehlende Kontakt zwischen dem Gleitband 111 und der Außenseite der Seilbewicklung zur Intensivierung oder Lockerung des Kontaktes verstellt werden mit dem Ziel, ein "Aufsteigen", also radiales Abheben, des Meßseiles zu verhindern, falls hierfür die Kombimagnete 102' bzw. die Haltemagnete 102 sich als nicht ausreichend erweisen sollten. Das Aufsteigen kann bereits dadurch verhindert werden, daß im wesentlichen kein Kontakt zwischen dem Gleitband 111 und der Außenseite der Meßseilwicklung vorhanden ist, da dieser Kontakt erst bei dem unerwünschten Aufsteigen des Meßseiies in radialer Richtung nach außen zustande kommt. Infolgedessen muß der evtl. vorhandene Abstand zwischen Außenfläche der Seilbewicklung und Innenfläche des Haltebandes so gering wie möglich, im Idealfall annähernd Null, eingestellt werden.

Fig. 20a zeigt eine Lösung, bei der das Gleitband 111 nicht lose um die seilbewickelte Trommel herumgelegt ist, sondern sich als Belag auf einem Gleitschuh 114 befindet, dessen der Seiltrommel 5 zugewandte Kontur der Außenkontur der bewickelten Seiltrommel 5 entspricht. Der Gleitschuh 114 erstreckt sich um etwa 90° um die äußere Mantelfläche der Seiltrommel 5 herum, und zwar in Aufwickelrichtung in dem an den Auflaufpunkt der Seiltrommel anschließenden Segment. Der Gleitschuh 114 ist am Gehäuse 104 befestigt, insbesondere verschraubt und so positioniert, daß sein aus Gleitband 111 bestehender Belag den gewünschten Kontakt zur Außenfläche der Seilbewicklung der Seiltrommel 5 aufweist, wie die Schnittdarstellung B-B zeigt.

### BEZUGSZEICHENLISTE

- 1: Flachformifederkaskade (Spiralfeder)
- 2: Zahnriemenscheiben
- 3: Zahnriemen
- 4: Spannrolle mit Exzenter
- 5: Seiltrommel
- 6: Endplatten
- 7: Kulissenrohrstück
- 8: Vielzahnwelle
- 9: Vietzahnmutter
- 10: Gewindespindel
- 15: Meßseil
- 16: Seilanschlagstück
- 18: Seildurchführung (Baugruppe, kaskadiert)
- 19: Spindelmutter
- 20: Gleitlagerbuchse
- 21: Einzelfedergehäuse
- 22: Motorgehäuse
- 23: Elektromotor
- 24: Drehwinkelsensor
- 25: Sensorgehäuse
- 26: Profil
- 27: Stimplatten
- 28: Wellenlager
- 29: Permanentmagnete
- 29': Flußstück (Weicheisen)
- 30: Anlaufscheibe
- 34: Seilabstreifer
- 35: Abstandsring für Seilabstreifer
- 36: Hohlraum für Schmutzablagerung
- 37, 37': Seildurchführung (Einzelteil)
- 40: Getriebe
- 41: Spiralfeder
- 42: Schlitten
- 43: Schraubkanal
- 44: Grundkörper
- 45: Innenraum
- 50: Längsrichtung
- 51: Spindelantrieb
- 52: Getriebe
- 53: Bremsmagnet
- 54: Bremsscheibe Seilhaftmagnete
- 101: Bremsmagnet
- 102: Haltemagnet
- 102': Kombimagnete
- 103: Einwirkbereich
- 104: Gehäuse
- 105: Wickelzylinder
- 106: Wickelfläche
- 107: Achse
- 108: Polschuh
- 109: Verstellschraube und Magnethalter
- 110: Magnetisierungsachse
- 111: Gleitband
- 112: Trommelplatte
- 113: Kontaktschutz
- 114: Gleitschuh
- 115: Festpunkt
- 116: Verstellpunkt
- 128: Lager
- 130: Gleitrolle

## Patentansprüche

1. Meßseil-Wegsensor mit
- einem Gehäuse,
- einer im Gehäuse drehbar, zur Drehachse in Längsrichtung (50) längsverschiebbar, angeordneten Seiltrommel (5),
- einer gehäusefest angeordneten Seildurchführung (18) für das Meßseil (15),
- einem Längsantrieb für die Seiltrommel (5) mit einem Spindelantrieb (51), welcher eine Gewindespindel (10) umfaßt, die relativ zu einer Spindelmutter (19) verschraubbar ist,
**dadurch gekennzeichnet, daß**
der Längsantrieb ein zusätzliches Getriebe (52) aufweist, das die Drehung der Seiltrommel (5) auf den Spindelantrieb (51) überträgt.

2. Meßseil-Wegsensor nach Anspruch 1,
**dadurch gekennzeichnet, daß**
die Gewindespindel (10) exzentrisch zur Drehachse der Seiltrommel (5), insbesondere außerhalb der Seiltrommel (5) und parallel zur Drehachse der Seiltrommel (5) angeordnet ist.

3. Meßseil-Wegsensor nach einem der vorhergehenden Ansprüche,
**dadurch gekennzeichnet, daß**
das Getriebe (52) ein Riemengetriebe, insbesondere ein Zahnriemengetriebe, ist, und die Riemenscheiben (2) leicht auswechselbar einerseits auf der Gewindespindel (10) und andererseits auf einer mit der Seiltrommel (5) mitdrehenden Welle (8) angeordnet sind, und insbesondere die mit der Seiltrommel (5) mitdrehende Welle (8) zentral zur Seiltrommel (5) angeordnet ist und aufgrund eines unrunden Außenumfanges direkt oder indirekt drehfest, aber längsverschiebbar, mit der Seiltrommel (5) verbunden ist, insbesondere daß die Welle (8) als Vielzahnwelle ausgebildet ist, und insbesondere die Seiltrommel (5) drehbar, axial im wesentlichen fest in einem Schlitten (42) geführt und gelagert ist, welcher die Spindelmutter (19) des Spindelantriebes (51) drehfest trägt und entlang der Vielzahnwelle (8) in Längsrichtung (50) verschiebbar ist.

4. Meßseil-Wegsensor nach einem der vorhergehenden Ansprüche,
**dadurch gekennzeichnet, daß**
die Axiallagerung der Seiltrommel (5) im Schlitten (42) berührungsfrei, insbesondere mittels Magneten, insbesondere mittels Permanentmagneten (29), erfolgt.

5. Meßseil-Wegsensor nach einem der vorhergehenden Ansprüche,
**dadurch gekennzeichnet, daß**
der Spindelantrieb (51) und/oder das Getriebe (52) innerhalb des Gehäuses des Meßseil-Wegsensors, insbesondere im gleichen Innenraum des Gehäuses wie die Seiltrommel (5) angeordnet ist, und insbesondere ein Rückstellantrieb und ein Drehwinkelsensor (24) mit der Welle (8) wirkverbunden, insbesondere koaxial auf dieser angeordnet sind, insbesondere an den zwei gegenüberliegenden Enden der Welle (8) und insbesondere in separaten Räumen des Gehäuses des Drehwinkelsensors, und insbesondere es sich bei dem Rückstellantrieb um eine Flachformfeder, insbesondere um eine Flachformfeder-Kaskade (1) handelt, und insbesondere die Flachformfeder-Kaskade (1) aus axial hintereinander angeordneten Flachformfedern, die in parallelen Ebenen zueinander liegen und so angeordnet sind, insbesondere wirkungsmäßig in Reihenschaltung angeordnet sind, so daß insbesondere nach dem zeitweisen Spannen der ersten Flachformfeder das Spannen der nächsten Flachformfeder vollzogen wird.

6. Meßseil-Wegsensor nach einem der vorhergehenden Ansprüche,
**dadurch gekennzeichnet, daß**
das Gehäuse ein Profil (26), insbesondere ein geschlossenes, hohles, insbesondere innen eckiges, Kastenprofil, umfaßt, welches in Längsrichtung (50) des Meßseil-Wegsensors verläuft und stimseitig durch, insbesondere aufgeschraubte Stirnplatten (27) verschlossen ist, und insbesondere das Profil (26) auf den Innenseiten nach innen hin offene, hinterschnittene Schraubkanäle (43) aufweist, die zum Einschrauben von selbstschneidenden Schrauben von der Stirnseite her geeignet sind, und insbesondere die Welle (8) und/oder die Gewindespindel (10) in den Stirnplatten (27) des Gehäuses gelagert sind.

7. Meßseil-Wegsensor nach einem der vorhergehenden Ansprüche,
**dadurch gekennzeichnet, daß**
- wenigstens ein Bremsmagnet (101) an einem nicht mit der Seiltrommel (5) mitdrehenden Punkt so angeordnet ist, daß er berührungslos magnetisch auf die Seiltrommel (5) an einem exzentrischen Einwirkbereich (103') gegen die Drehrichtung bremsend einwirkt, und
- die Seiltrommel (5) wenigstens im Einwirkbereich (103') aus elektrisch leitfähigem Material besteht, und insbesondere der Bremsmagnet (101) am Gehäuse (104) angeordnet ist.

8. Meßseil-Wegsensor nach einem der vorhergehenden Ansprüche,
**dadurch gekennzeichnet, daß**
- wenigstens ein Bremsmagnet (101) an der Seiltrommel (5) exzentrisch so angeordnet ist, daß er berührungslos magnetisch auf das Gehäuse in Drehrichtung bremsend einwirkt, und
- das Gehäuse (4) wenigstens im Einwirkbereich (103') aus elektrisch leitfähigem Material besteht.

9. Meßseil-Wegsensor nach einem der vorhergehenden Ansprüche,
**dadurch gekennzeichnet, daß**
- an der Seiltrommel (5) radial innerhalb der Mittelfläche (106) des Wickelzylinders (105) wenigstens ein Haltemagnet (102) angeordnet ist zum Halten des Meßseiles (15) radial nach innen an der Wickelfläche (106), und
- das Meßseil (15) aus magnetisierbarem Material besteht.

10. Meßseil-Wegsensor nach einem der vorhergehenden Ansprüche,
**dadurch gekennzeichnet, daß**
um wenigstens einen Teil des Außenumfanges der ganz oder teilweise mit Meßseil (15) beweglichen Wickelfläche (106) ein Gleitband (111), insbesondere ein Band aus Textilmaterial, insbesondere ein Gleitband oder ein Band aus anderem gleitfähigen, nicht abrasiven Material, in geringem Abstand und/oder an dem Außenumfang der Bewicklung mit Meßseil schleifend herumgeführt ist und der Abstand, bzw. Anpreßdruck des Bandes gegen die Bewicklung mit Meßseil (15) einstellbar ist.

11. Meßseil-Wegsensor nach einem der vorhergehenden Ansprüche,
**dadurch gekennzeichnet, daß**
der an der Seiltrommel (5) angeordnete mindestens eine Bremsmagnet (101) und/oder Haltemagnete (102) jeweils gleichmäßig über den Umfang verteilt, insbesondere paarweise zur Vermeidung von Unwucht an der Seiltrommel angeordnet sind.

12. Meßseil-Wegsensor nach einem der vorhergehenden Ansprüche,
**dadurch gekennzeichnet, daß**
die Bremsmagnete (101) mit möglichst großem Abstand zur Rotationsachse (107) der Seiltrommel (5), insbesondere nahe am Außenumfang der Seiltrommel (105), angeordnet sind, und insbesondere die Bremsmagnete (101) und/oder die Haltemagnete (102) Permanentmagnete sind, und insbesondere die Haltemagnete mit ihrer Magnetisierungsachse (110) parallel zur Rotationsachse (107) der Seiltrommel (5) angeordnet sind, und insbesondere die Bremsmagnete (101) mit ihrer Magnetisierungsachse (110) parallel zur Rotationsachse (107) der Seiltrommel (5) angeordnet und entgegengesetzt gepolt sind.

13. Meßseil-Wegsensor nach einem der vorhergehenden Ansprüche,
**dadurch gekennzeichnet, daß**
die Bremsmagnete (101) mit Polschuh-Stücken radial innerhalb sowie radial außerhalb der Magnetisierungsachse (110), insbesondere mit einem tropfförmigen Polschuh-Stück (108), welches nur zu dem beeinflussenden Bauteil hin offen ist, ausgestattet ist.

14. Meßseil-Wegsensor nach einem der vorhergehenden Ansprüche,
**dadurch gekennzeichnet, daß**
die Bremsmagnete (101) und/oder die Haltemagnete (102) in einem Magnethalter (109) aufgenommen sind, dessen Position in axialer Richtung gegenüber dem zu beeinflussenden Bauteil einstellbar, insbesondere stufenlos einstellbar, ist, und insbesondere der Magnethalter (109) ein Gewindebolzen ist, an dessen einer Stimseite der Bremsmagnet (101) und/oder Haltemagnet (102) gegen das zu beeinflussende Bauteil hin gerichtet angeordnet ist.

15. Meßseil-Wegsensor nach einem der vorhergehenden Ansprüche,
**dadurch gekennzeichnet, daß**
als Bremsmagnete (101) beidseits der Seiltrommel (5) gegenüberliegend und in Längsrichtung mit entgegengesetzten Polen gegeneinanderweisende Magnete in Längsrichtung fluchtend angeordnet sind, und insbesondere als Bremsmagnete (101) scheibenförmige Magnete verwendet werden, deren Magnetisierungsachse (110) der Dicke des scheibenförmigen Magneten entspricht, und insbesondere als Bremsmagnete (101) scheibenförmige Magnete verwendet werden, die in Sektoren unterteilt sind, wobei die einzelnen Sektoren als Einzelmagnete wirken, deren Magnetisierungsachsen (10) jeweils der Dicke des scheibenförmigen Magneten entsprechen, wobei die Polung der einzelnen Sektoren entlang des Umfanges wechselt.

16. Meßseil-Wegsensor nach einem der vorhergehenden Ansprüche,
**dadurch gekennzeichnet, daß**
als Bremsmagnete (101) scheibenförmige Magnete verwendet werden, bei denen nur eine der Hauptflächen magnetisiert ist durch sektorenförmig abwechselnde Magnetisierung in Umfangsrichtung.

17. Meßseil-Wegsensor nach einem der vorhergehenden Ansprüche,
**dadurch gekennzeichnet, daß**
der bzw. die Bremsmagnete (101) und der bzw. die Haltemagnete (102) gemäß einem der vorhergehenden Ansprüche in jeweils einem Kombimagnet funktionsvereinigt sind.

## Claims

1. A measuring cable travel sensor comprising
- a housing,
- a cable drum,
- means mounting the cable drum (5) in the housing rotatably and longitudinally displaceably in the longitudinal direction relative to the axis of drum rotation,
- a cable guide means (18) for the measuring cable (15), arranged stationarily with respect to the housing,
- a longitudinal drive means for the cable drum (5) including a spindle drive means (51) comprising a screwthreaded spindle (10) and a spindle nut (19) screwable thereon,
**characterised in that**
the longitudinal drive means includs an additional transmission means (52) for transmitting the rotational movement of the cable drum (5) to the spindle drive means (51).

2. A measuring cable travel sensor as set forth in claim 1
**characterised in that**
means mounting the screwthreaded spindle (10) in eccentric relationship with respect to the axis of rotation of the cable drum (5) and in particular outside the cable drum (5) and in parallel relationship with the axis of rotation of the cable drum (5).

3. A measuring cable travel sensor as set forth in one of the preceding claims,
**characterised in that**
the transmission means (52) comprises a belt transmission means, more particularly a toothed belt transmission means, having a plurality of belt pulleys (2), a shaft (8) which also rotates with the cable drum (5), and means easily replaceably mounting the belt pulleys (2) on the screwthreaded spindle (10) on the one hand and on the other hand on said shaft (8) and particularly wherein said shaft which also rotates with the cable drum (5) is arranged in central relationship with the cable drum and has a non-round external periphery for directly or indirectly connecting same non-rotatably but longitudinally displaceably to the cable drum (5) and particularly the shaft (8) is a splined shaft and particularly means for rotatably and substantially axially fixedly supporting the cable drum (5) in the carriage, the carriage (42) non-rotatably supporting the spindle nut (14) of the spindle drive means (51) in the carriage and displaceable along said splined shaft (8) in the longitudinal direction (50).

4. A measuring cable travel sensor as set forth in one of the preceding claims
**characterised in that**
contact-free supporting means for axially supporting the cable drum (5) in said carriage (42), particularly comprising magnet means such as permanent magnet means (29).

5. A measuring cable travel sensor as set forth in one of the preceding claims,
**characterised in that**
at least one of said spindle drive means (51) and/or said additional transmission means (52) is disposed within said housing and more particularly in the same space in the housing as the cable drum (5), particularly including a return drive means and a rotary angle sensor (24) operatively connected to said shaft (8), more particularly in coaxial relationship thereto, and particularly disposed at first and second mutually opposite ends of said shaft (8) and more particularly in separate spaces in a housing of said rotary angle sensor, wherein particularly the return drive means is a flat spring means, wherein particularly said flat spring means comprises a plurality of axially successively arranged flat springs which are disposed in mutually parallel planes and are so arranged and in particular are so operatively disposed in a series array (1) that after time-wise stressing of the first spring of the array tightening of the next spring occurs.

6. A measuring cable travel sensor as set forth in one of the preceding claims,
**characterised in that**
said housing includes a shaped portion (26) and more particularly a closed hollow and in particular internally angular box shaped portion which extends in the longitudinal direction (50) of the measuring cable travel sensor, and end plate portions (27) closing said box member at the ends, and wherein particularly said end plate portions are secured to said box member by screw means, wherein particularly said box member has on the insides thereof inwardly open screw passages (43) of an undercut configuration adapted to receive by screwing therein self-tapping screws from the end of the box member, wherein particularly said screw threaded spindle (10) and/or said shaft (8) is supported in said end plate portions (27) of said housing.

7. A measuring cable travel sensor as set forth in one of the preceding claims,
**characterised in that**
- at least one braking magnet (101) arranged at a point non-rotatable with said cable drum (5) and adapted to act brakingly against the direction of rotation in contact-less manner magnetically on the cable drum (5) at an eccentric region of action (103') thereof,
- the cable drum (5) at least in said region (103') comprising electrically conductive material and wherein particularly the braking magnet (101) is arranged on said housing (104).

8. A measuring cable travel sensor as set forth in one of the preceding claims,
**characterised in that**
- at least one braking magnet (101) arranged eccentrically at the cable drum (5) such that it brakingly acts on the housing in the direction of rotation in contact-less mode magnetically and,
- the housing (4) at least in the region (103') in which the magnet acts thereon comprising electrically conductive material.

9. A measuring cable travel sensor as set forth in one of the preceding claims,
**characterised in that**
- at least one holding magnet (102) on the cable drum (5) radially within the winding surface (106) of said winding cylinder portion (105), and operable to hold said measuring cable (15) radially inwardly to said winding surface (106),
- the measuring cable (15) comprising at least in part magnetisable material.

10. A measuring cable travel sensor as set forth in one of the preceding claims,
**characterised in that**
a sliding (111) band extending around at least a part of the periphery of said winding surface (106) of said cable drum fully or partially wound with the measuring cable (15) at at most a small spacing therefrom, and means for adjusting the spacing of said band relative to the winding of measuring cable on said winding surface,
wherein particularly said band comprises textile material,
wherein particularly said band comprises slidable non-abrasive material,
wherein particularly said band is passed around said winding surface in lightly rubbing relationship with the measuring cable at the outside periphery of the winding thereof,
wherein particularly said adjusting means are also adapted to adjust a contact pressure or a distance of said band against said measuring cable (15) on said winding surface.

11. A measuring cable travel sensor as set forth in one of the preceding claims,
**characterised in that**
at least a pair of braking magnets (101) and/or holding magnets (102) arranged on the cable drum in uniformly peripherally distributed array for avoiding unbalance on the cable drum.

12. A measuring cable travel sensor as set forth in one of the preceding claims,
**characterised in that**
said at least one braking magnet (101) is disposed at the largest possible spacing relative to the axis of rotation (107) of the cable drum (5), wherein particularly said at least one braking magnet is arranged in the proximity of the external periphery of the cable drum (105), wherein particularly the at least one braking magnet (101) and/or at least one holding magnet (102) is a permanent magnet, wherein particularly said at least one holding magnet has its axis of magnetisation (110) arranged parallel to the axis of rotation (107) of the cable drum (5), wherein particularly the at least one braking magnet (101) is arranged with its magnetisation axis (110) parallel to the axis of rotation (107) of the cable drum (5) and particularly being of opposite polarities.

13. A measuring cable travel sensor as set forth in one of the preceding claims,
**characterised in that**
a plurality of braking magnets (101) including pole pieces radially inwardly and radially outwardly of the magnetisation axis (110), wherein particularly each said pole piece (108) is of a generally cup-shaped configuration which is open only towards the component to be magnetically influenced.

14. A measuring cable travel sensor as set forth in one of the preceding claims,
**characterised in that**
a magnetic holder (109) for accommodating the at least one braking magnet (101) and/or holding magnet (102), and means for adjusting the position of the magnet holder in the axial direction relative to the component to be magnetically influenced, in particular steplessly, wherein particularly the magnet holder (109) is a screwthreaded member carrying said braking magnet (101) and/or holding magnet (102) and directed towards said component.

15. A measuring cable travel sensor as set forth in one of the preceding claims,
**characterised in that**
mutually facing magnets are arranged in alignment in the longitudinal direction as braking magnets (101) in opposite relationship on both sides of the cable drum (5) facing towards each other with opposite poles in the longitudinal direction, wherein particularly said braking magnet (101) is a disk-shaped magnet having a magnetisation axis (101) corresponding to the thickness of the magnet, wherein particularly said braking magnet (101) is a disk-shaped magnet subdivided into sectors, wherein the individual sectors are operative as individual magnets whose magnetisation axes (10) respectively correspond to the thickness of said disk-shaped magnet, the polarity of the individual sectors alternating along the periphery.

16. A measuring cable travel sensor as set forth in one of the preceding claims,
**characterised in that**
the braking magnet (101) is a disk-shaped magnet having only one of its main faces magnetised by magnetisation alternating in a sector configuration in a peripheral direction.

17. A measuring cable travel sensor as set forth in one of the preceding claims,
**characterised in that**
the at least one braking magnet (101) and the at least one holding magnet (102) being functionally combined in a respective combination magnet.

## Revendications

1. Capteur de distance pour câble de mesure avec
- un boîtier
- un tambour de câble (5) disposé dans le boîtier rotatif coulissant longitudinalement par rapport à l'axe de rotation dans le sens de la longueur (50),
- un passage de câble (18) disposé solidaire au boîtier pour le câble de mesure (15)
- un entraînement longitudinal pour le tambour de câble (5) avec un entraînement de broche (51) qui comprend une broche filetée (10) qui peut être vissée par rapport à un écrou de broche (19), **caractérisé en ce que** l'entraînement longitudinal présente un engrenage supplémentaire (52) qui transmet la rotation d'un tambour de câble (5) à un entraînement de broche (51).

2. Capteur de distance pour câble de mesure selon la revendication 1, **caractérisé en ce que** la broche filetée (10) est disposée excentrique par rapport à l'axe de rotation du tambour de câble (5), en particulier à l'extérieur du tambour de câble (5).

3. Capteur de distance pour câble de mesure selon l'une des revendications précédentes, **caractérisé en ce que** l'engrenage (52) est un engrenage à courroie, en particulier un engrenage à courroie dentée et la poulie de courroie (2) est disposée facilement interchangeable d'une part sur la broche filetée (10) et d'autre par sur l'arbre (8) entraîné en rotation avec le tambour de câble (5) et en particulier l'arbre (8) entraîne avec le tambour de câble (5) est disposé central par rapport au tambour de câble (5) et en raison d'une périphérie externe non ronde est relié directement ou indirectement fixe en rotation mais coulissant en longueur au tambour de câble (5), en particulier **en ce que** l'arbre (8) est réalisé comme un arbre à multident et en particulier le tambour de câble (5)est guidé et logé rotatif, axial essentiellement fixe dans un chariot (42) qui porte de manière non rotative l'écrou à broche (19) de l'entraînement de broche (51) et est coulissant le long de l'arbre multident (8) dans le sens de la longueur (50).

4. Capteur de distance pour câble de mesure selon l'une des revendications précédentes, **caractérisé en ce que** le logement axial du tambour de câble (5) s'effectue sans contact dans le chariot (42) en particulier au moyen d'aimants en particulier au moyen d'amants permanents (29).

5. Capteur de distance pour câble de mesure selon l'une des revendications précédentes, **caractérisé en ce que** l'entraînement de broche (51) et/ou l'engrenage (52) est disposé à l'intérieur du boîtier du capteur de distance pour câble de mesure en particulier dans le même espace intérieur du boîtier que le tambour de câble (5), et en particulier un entraînement de rappel et un capteur angulaire de rotation (24) sont reliés activement avec l'arbre (8) et sont disposés en particulier coaxialement sur ce dernier, en particulier sur les deux extrémités opposées de l'arbre (8) et en particulier dans des espaces séparés du boîtier du capteur angulaire de rotation et en particulier il s'agit pour l'entraînement de rappel d'un ressort plat en particulier d'une cascade de ressort plat (1) et en particulier la cascade de ressort plat (1) se compose de ressorts plats disposés axialement les uns derrière les autres qui sont dans des plans parallèles et sont disposés de sorte à être disposés fonctionnellement en montage en série de sorte qu'en particulier après le serrage temporaire du premier ressort plat, le serrage du ressort plat suivant soit effectué.

6. Capteur de distance pour câble de mesure selon l'une des revendications précédentes, **caractérisé en ce que** le boîtier comprend un profil (26) en particulier un profil en caisson angulaire creux, fermé en particulier à l'intérieur angulaire qui s'étend dans le sens longitudinal (50) du capteur de distance pour câble de mesure et est fermé en face avant par des plaques frontales (27) vissées et **en ce qu'**en particulier le profil (26) présente sur les faces internes des canaux à vis (43) découpés ouverts vers l'intérieur qui sont appropriés pour le vissage de vis autotaraudeuses depuis la face avant et **en ce qu'**en particulier l'arbre (8) et/ou la broche filetée (10) sont logées dans les plaques frontales (27) du boîtier.

7. Capteur de distance pour câble de mesure selon l'une des revendications précédentes, **caractérisé en ce qu'**
- au moins un aimant de freinage (101) est disposé sur un point ne tournant pas avec le tambour de câble (5) de sorte qui agit sans contact magnétiquement sur le tambour de câble (5) sur une zone d'action excentrique (103') par freinage à l'encontre du sens de rotation, et
- le tambour de câble (5) se compose au moins dans la zone d'action (103') d'un matériau électriquement conducteur et **en ce qu'**en particulier l'aimant de freinage (101) est disposé sur le boîtier (104).

8. Capteur de distance pour câble de mesure selon l'une des revendications précédentes, **caractérisé en ce que**
- au moins un aimant de freinage (101) est disposé excentrique sur le tambour de câble (5) de sorte qui agit sans contact magnétiquement sur le boîtier par freinage à l'encontre du sens de rotation, et
- le boîtier (4) se compose au moins dans la zone d'action (103') d'un matériau électriquement conducteur.

9. Capteur de distance pour câble de mesure selon l'une des revendications précédentes, **caractérisé en ce que**
- sur le tambour de câble (5), il est disposé radialement à l'intérieur de la surface médiane (106) du cylindre d'enroulement (105) au moins un aimant de retenue (102) pour maintenir le câble de mesure (15) radialement vers l'intérieur contre la surface d'enroulement (106) et
- le câble de mesure (15) se compose de matériau magnétisable.

10. Capteur de distance pour câble de mesure selon l'une des revendications précédentes, **caractérisé en ce qu'**au moins autour d'une partie de la périphérie externe de la surface d'enroulement (106) mobile en tout ou partie avec le câble de mesure (15), il est guidé une bande de glissement (111), en particulier une bande en matériau textile, en particulier une bande de glissement ou une bande en un autre matériau non abrasif glissant à faible distance et/ou contre la périphérie externe de l'enroulement avec le câble de mesure et la distance respectivement la pression de la bande contre l'enroulement avec le câble de mesure (15) est réglable.

11. Capteur de distance pour câble de mesure selon l'une des revendications précédentes, **caractérisé en ce que** au moins un aimant de freinage (101) disposé sur le tambour de câble (5) et/ou des aimants de retenue (102) sont disposés respectivement de manière répartie régulièrement sur la périphérie en particulier par paire pour éviter le balourd sur le tambour de câble.

12. Capteur de distance pour câble de mesure selon l'une des revendications précédentes, **caractérisé en ce que** les aimants de freinage (101) sont disposés à distance la plus grande possible de l'axe de rotation (107) du tambour de câble (5), en particulier proche de la périphérie externe du tambour de câble (105) et **en ce qu'**en particulier les aimants de freinage (101) et/ou les aimants de retenue (102) sont des aimants permanents et **en ce qu'**en particulier les aimants de retenue avec leur axe de magnétisation (110) sont disposés parallèlement à l'axe de rotation (107) du tambour de câble (5) et en particulier les aimants de freinage (101) sont disposés avec leur axe de magnétisation (110) parallèlement à l'axe de rotation (107) du tambour de câble (5) et sont polarisé en opposé.

13. Capteur de distance pour câble de mesure selon l'une des revendications précédentes, **caractérisé en ce que** les aimants de freinage (101) sont munis de masses polaires radialement à l'intérieur ainsi que radialement à l'extérieur de l'axe de magnétisation (110), en particulier d'une masse polaire en forme de goutte (108) qui est ouverte uniquement en direction du composant subissant l'impact.

14. Capteur de distance pour câble de mesure selon l'une des revendications précédentes, **caractérisé en ce que** les aimants de freinage (101) et/ou les aimants de retenue (10229 sont logés dans un support d'aimant (102) dont la position est réglable dans le sens axial par rapport au composant subissant l'action, en particulier en continu, et e ce qu'en particulier le support d'aimant (109) est un boulon fileté sur la face frontale duquel est disposé l'aimant de freinage (101) et/ou l'aimant de retenue (102) en étant dirigé en direction du composant subissant l'action.

15. Capteur de distance pour câble de mesure selon l'une des revendications précédentes, **caractérisé en ce qu'**en tant qu'aimants de freinage (101) de part et d'autre du tambour de câble (5) des aimants sont disposés en opposé dans le sens longitudinale avec des pôles opposés et sont alignés dans le sens longitudinal et en particulier en tant q'aimants de freinage (101), il est utilisé des aimants en forme de disque dont l'axe de magnétisation (110) correspond à l'épaisseur de l'aimant en forme de disque et en particulier il est utilisé en tant qu'aimant de freinage (101) des aimants en forme de disque qui sont divisés en secteurs, dont les secteurs agissent comme des aimants séparés dont les axes de magnétisation (10) correspondent respectivement à l'épaisseur de l'aimant en forme de disque la polarisation de chacun des secteurs alternant le long de la périphérie.

16. Capteur de distance pour câble de mesure selon l'une des revendications précédentes, **caractérisé en ce qu'**en tant q'aimants de freinage (101) il est utilisé des aimants en forme de disque dont seulement une des surfaces principales est magnétisée par une magnétisation alternée en secteur dans le sens périphérique.

17. Capteur de distance pour câble de mesure selon l'une des revendications précédentes, **caractérisé en ce que** le respectivement les aimants de freinage (101) et le respectivement les aimants de retenue (102) sont rassemblés fonctionnellement en un aimant combiné selon l'une des revendications précédentes.
